# EUROPÄISCHE PATENTANMELDUNG

(11) **EP 1 995 692 A2**
(43) Veröffentlichungstag der Anmeldung: **26.11.2008**
(21) Anmeldenummer: 08105158.3
(22) Anmeldetag: 12.04.2005
(51) Int. Cl.: G06T 7/20

(54) **Verfahren zur Erkennung und Verfolgung von Objekten**

(30) Priorität: 19.04.2004 DE 102004018813
(62) Teilanmeldung aus: 05007965.6
(71) Anmelder: IBEO Automobile Sensor GmbH, 22143 Hamburg (DE)
(72) Erfinder: Lages, Ulrich, Dr., 21031 Hamburg (DE); Kämpchen, Nico, 89081 Ulm (DE); Fürstenberg, Kay, 20459 Hamburg (DE); Dietmayer, Klaus, Dr., 89075 Ulm (DE)
(74) Vertreter: Ludewigt, Christoph

(57) **Zusammenfassung**

Bei einem Verfahren zur Erkennung und Verfolgung von Objekten, die Gegenständen in wenigstens einem Erfassungsbereich wenigstens eines Sensors für elektromagnetische Strahlung entsprechen, auf der Basis von wiederholt mittels des Sensors erfassten Bildern des Erfassungsbereichs werden in aufeinanderfolgenden Zyklen aufeinanderfolgende Bilder ausgewertet und es wird jeweils wenigstens ein in einem Zyklus auf der Basis eines entsprechenden Bildes aufgefundenes Objekt in einem späteren Zyklus in einem entsprechenden späteren Bild gesucht, um das Objekt zu verfolgen. Es wird auf der Basis der Ergebnisse einer wenigstens vorläufigen Auswertung eines aktuellen Bildes während wenigstens eines aktuellen Zyklus wenigstens einem in dem aktuellen Zyklus ermittelten Teil eines aktuellen Bildes oder einem in dem aktuellen Zyklus erkannten Objekt wenigstens ein Teil eines früheren Bildes und/oder wenigstens eine Angabe in Bezug auf einen früheren Zustand des Objekts oder eines diesem entsprechenden Gegenstands, die unter Verwendung eines entsprechenden früheren Bildes in dem aktuellen Zyklus ermittelt wird, zugeordnet.

## Beschreibung

Die vorliegende Erfindung betrifft ein Verfahren zur Erkennung und Verfolgung von Objekten, die Gegenständen in einem Erfassungsbereich eines Sensors für elektromagnetische Strahlung entsprechen, sowie eine Vorrichtung zur Durchführung des Verfahrens.

Verfahren zur Erkennung und Verfolgung von Objekten sind grundsätzlich bekannt. Typischerweise werden dabei in konstanten Zeitabständen Bilder eines Erfassungsbereichs durch einen Sensor für elektromagnetische Strahlung, beispielsweise einen Laserscanner oder eine Videokamera, erfasst. In den Bildern wird dann nach Objekten gesucht, die Gegenständen in dem Erfassungsbereich entsprechen. Wurde in einem Bild ein Objekt erstmals gefunden, wird in nachfolgenden Zyklen des Verfahrens nach diesem Objekt gesucht, um dessen Lage bzw. Lageänderung im Laufe der Zeit verfolgen zu können. Dazu wird häufig ausgehend von der Lage und Geschwindigkeit eines Objekts in einem vorhergehenden Zyklus dessen Lage für einen aktuellen Zyklus bzw. in einem aktuellen Bild prädiziert, um dann in dem Bild in der Nähe der prädizierten Lage des Objekts aufgefundene Elemente, beispielsweise Segmente, dem Objekt aus dem vorhergehenden Zyklus zuordnen und so dessen aktuelle Lage erfassen zu können.

Solche Verfahren eignen sich beispielsweise zur Überwachung eines Bereichs vor und/oder neben einem Kraftfahrzeug. Ein möglicher Vorteil einer solchen Überwachung kann darin liegen, dass plötzlich auftretende Gefahren automatisch erkannt und entsprechende Gegenmaßnahmen eingeleitet werden können. Dazu ist es allerdings notwendig, dass Objekte sehr schnell erkannt und genau verfolgt werden können.

Bei den oben erwähnten Verfahren wird mit zunehmender Dauer der Verfolgung eines Objekts häufig die Genauigkeit der erfassten Objekteigenschaften zunehmen, da im Verlauf der Verfolgung weitere Informationen über das Objekt gesammelt werden können, die eine bessere Charakterisierung des Objekts bzw. des Zustands des Objekts erlauben. Dementsprechend können Ungenauigkeiten insbesondere dann auftreten, wenn in Bildern neue Objekte auftreten. Im Beispiel des Kraftfahrzeugs kann es sich hierbei beispielsweise um Fußgänger handeln, die, verdeckt durch einen anderen Gegenstand wie beispielsweise ein an einem Fahrbahnrand parkendes Kraftfahrzeug, plötzlich auf die Straße treten und erst dann von dem Sensor erfassbar werden. Das gleiche Problem kann auftreten, wenn Fußgänger vor einem Gegenstand so positioniert sind, dass das Objektverfolgungsverfahren den Fußgänger und den Gegenstand zu einem Objekt zusammenfasst, so dass der Fußgänger auch erst erkannt wird, wenn er sich weit genug von dem Gegenstand entfernt hat.

US 6,480,615 B1 beschreibt ein Verfahren zur Verfolgung von Objekten, bei dem der optische Fluss eines Bildfeldes unter Verwendung von Daten von drei nacheinander aufgenommenen Bildern k-1, k, k+1 bestimmt wird. Anhand eines Parameters S wird entschieden, ob die für die Bestimmung des optischen Flusses benötigten Gradienten aus den Bildern k-1 und k oder aus den Bildern k und k+1 verwendet werden. Durch die Möglichkeit der Verwendung von Gradienten. die auf den Bildern k-1 und k beruhen, kann auch der optische Fluss in Bereichen, die durch ein Vordergrundobjekt zeitweise verdeckt werden, bestimmt werden.

Der vorliegenden Erfindung liegt die Aufgabe zugrunde, ein Verfahren zur Erkennung und Verfolgung von Objekten, die Gegenständen in einem Erfassungsbereich eines Sensors für elektromagnetische Strahlung entsprechen, bereitzustellen, das eine schnelle Erkennung und Verfolgung von Objekten erlaubt.

Die Aufgabe wird gelöst durch ein Verfahren mit den Merkmalen des Anspruchs 1.

Bei einem Verfahren, was nicht Gegenstand dieser Teilanmeldung ist, zur Erkennung und Verfolgung von Objekten, die Gegenständen in wenigstens einem Erfassungsbereich wenigstens eines Sensors für elektromagnetische Strahlung entsprechen, auf der Basis von wiederholt mittels des wenigstens einen Sensors erfassten Bildern des Erfassungsbereichs werden in aufeinanderfolgenden Zyklen aufeinanderfolgende Bilder ausgewertet und es wird jeweils wenigstens ein in einem Zyklus auf der Basis eines entsprechenden Bildes aufgefundenes Objekt in einem späteren Zyklus in einem entsprechenden späteren Bild gesucht, um das Objekt zu verfolgen. Es wird bei Erkennung eines neuen Objektes und/oder Merkmals in einem aktuellen Zyklus auf der Basis der Ergebnisse einer wenigstens vorläufigen Auswertung eines aktuellen Bildes während wenigstens eines aktuellen Zyklus wenigstens einem in dem aktuellen Zyklus ermittelten Teil eines aktuellen Bildes oder einem in dem aktuellen Zyklus erkannten Objekt wenigstens ein Teil eines früheren Bildes und/oder wenigstens eine Angabe in Bezug auf einen früheren Zustand des Objekts oder eines diesem entsprechenden Gegenstands, die unter Verwendung eines entsprechenden früheren Bildes in dem aktuellen Zyklus ermittelt wird, zugeordnet.

Die Vorrichtung zur Erkennung und Verfolgung von Objekten weist mindestens einen zur Erfassung von Bildern eines Erfassungsbereichs ausgebildeten Sensor für elektromagnetische Strahlung und eine mit dem zumindest einen Sensor verbundene Datenverarbeitungseinrichtung auf, die zur Durchführung des erfindungsgemäßen Verfahrens ausgebildet ist und insbesondere Mittel zur Auswertung aktueller Bilder des zumindest einen Sensors, Mittel zur Ermittlung von Teilen eines aktuellen Bildes als Ergebnis einer wenigstens vorläufigen Auswertung des aktuellen Bildes oder zur Erkennung eines Objekts in dem aktuellen Zyklus und Mittel zur Zuordnung von Teilen eines früheren Bildes und/oder zur Ermittlung wenigstens einer Angabe in Bezug auf einen früheren Zustand des Objekts oder eines diesem entsprechenden Gegen-stands unter Verwendung eines entsprechenden früheren Bildes in dem aktuellen Zyklus und Zuordnung der Angabe zu dem Teil des aktuellen Bildes oder dem aktuellen Objekt umfasst.

Das Verfahren, das mittels der Vorrichtung durchführbar ist, dient zur Erkennung und Verfolgung von Objekten in einem Erfassungsbereich. Dieser kann grundsätzlich ortsfest sein oder sich bewegen, was insbesondere dann der Fall sein kann, wenn die Bilder mittels eines an einem Fahrzeug befestigten Sensors erfasst werden.

Die Bilder werden von wenigstens einem Sensor für elektromagnetische Strahlung erfasst. Bei dem Sensor kann es sich um einen rein passiven Sensor handeln, der nur elektromagnetische Strahlung empfängt. Es kann jedoch auch ein Sensor verwendet werden, der über eine Quelle für insbesondere gerichtet, abstrahlbare elektromagnetische Strahlung, die von einem durch die Strahlung beleuchteten Punkt oder Bereich auf einem Gegenstand zurückgeworfen werden kann, und wenigstens einen entsprechenden für von einem Gegenstandspunkt oder -bereich zurückgeworfene Strahlung empfindliches Sensorelement verfügt. Weiterhin können auch Kombinationen von Sensoren für elektromagnetische Strahlung eingesetzt werden, die verschiedene Typen von Bildern erfassen. Die Erfassungsbereiche der Sensoren brauchen sich dann nicht unbedingt zu überschneiden, doch ist es bevorzugt, dass diese sich wenigstens teilweise überschneiden.

Unter einem Bild wird dabei insbesondere auch eine Menge von Daten verstanden, die jeweils die Lage eines Punktes oder Bereichs auf einem oder mehreren von dem Sensor erfassten Gegenstand in wenigstens einer Richtung quer zu einer Sichtrichtung des Sensors und wenigstens eine Eigenschaft des Gegenstandspunktes oder -bereichs wiedergeben. Die Lage des Gegenstandspunktes kann dabei beispielsweise bei Erfassung von Gegenstandspunkten in einer Abtastebene durch einen Winkel gegenüber einer beliebigen, aber fest vorgegebenen Referenzrichtung, beispielsweise des Sensors, gegeben sein. Bei Erfassung von Gegenstandspunkten oder -bereichen im Raum können die Lagen durch Lagen von Sensorelementen des Sensors und gegebenenfalls Abbildungseigenschaften gegeben sein. Bei der Eigenschaft kann es sich beispielsweise um die Intensität und/oder Wellenlänge bzw. Farbe der abgestrahlten optischen Strahlung, die Entfernung von dem Sensor oder auch die Geschwindigkeit in radialer Richtung relativ zu dem Sensor handeln. So können beispielsweise Videobilder Daten zur Intensität abgestrahlter optischer Strahlung als Eigenschaft und in Bezug auf ein Sensorelement, das die Strahlung eines Gegenstandspunktes oder -bereichs erfasst hat, und damit in Bezug auf eine Lage enthalten, während Entfernungsbilder als Eigenschaften der erfassten Gegenstandspunkte bzw. -bereiche die Entfernung von dem Sensor und als Lageinformation einen Winkel, unter dem der Gegenstandspunkt oder -bereich erfasst wurde, enthalten können. Geschwindigkeitsbilder enthalten schließlich Daten über die Geschwindigkeit der Gegenstandspunkte bzw. -bereiche relativ zu dem Sensor.

Die Bilder brauchen dabei nicht unmittelbar durch einen einzelnen Sensor erfasst zu sein. Vielmehr ist es auch möglich, wenigstens zwei zeitlich einander zugeordnete Bilder, die durch wenigstens zwei Sensoren für elektromagnetische Strahlung erfasst wurden, zu einem Gesamtbild zu kombinieren, das einen größeren Erfassungsbereich oder zusätzliche Eigenschaften von Gegenstandspunkten oder -bereichen wiedergibt. Beispielsweise können aus zwei Bildern, die von zwei beabstandet zueinander angeordneten Videokameras erfasst wurden, unter Beachtung der Abbildungseigenschaften und der Anordnung der Videokameras Entfernungsbilder erzeugt werden, die zusätzlich zu einer Entfernung eines Gegenstandspunkts bzw. -bereichs von einem relativ zu den Videokameras ortsfesten Bezugspunkt auch Daten in Bezug auf die Intensität bzw. Farbe des von dem jeweiligen Gegenstandspunkt bzw. -bereich abgegebenen Lichts aufweisen.

Weiterhin können auch verschiedene Typen von Bildern zu einem Gesamtbild kombiniert bzw. gemeinsam oder auch in Abhängigkeit voneinander verarbeitet werden. So können vorzugsweise Video- und Entfernungsbilder gemeinsam verarbeitet werden, ohne im engeren Sinne zu einem Satz von Bilddaten zusammengefasst zu werden.

Die bei dem Verfahren verwendeten Bilder sind zu aufeinanderfolgenden Zeiten erfasst, wobei diese vorzugsweise einen konstanten zeitlichen Abstand voneinander aufweisen. Der Sensor der Vorrichtung ist daher zur wiederholten Erfassung von Bildern des Erfassungsbereichs abgebildet. Werden für einen Zyklus mehrere Bilder verwendet, sind diese vorzugsweise im Wesentlichen synchron erfasst, d.h. ihre Erfassungszeiten unterscheiden sich um eine kleinere Zeitspanne als die zwischen aufeinanderfolgenden Abtastungen durch den Sensor mit der geringsten Erfassungsrate.

Die erfassten Bilder werden dann in aufeinanderfolgenden Zyklen ausgewertet, wobei in einem gegebenen Zyklus wenigstens ein entsprechendes Bild ausgewertet wird. Werden mehrere Bilder im Wesentlichen synchron erfasst, genügt, dass eines der Bilder wenigstens vorläufig ausgewertet wird.

Es wird jeweils wenigstens ein in einem Zyklus auf der Basis wenigstens eines entsprechenden Bildes aufgefundenes Objekt in einem späteren Zyklus in einem entsprechenden späteren Bild gesucht, um es zu verfolgen. Hierzu können insbesondere konventionelle Objekterkennungs- und -verfolgungsverfahren verwendet werden. In diesem Fall kann eine Zuordnung von Bildpunkten des aktuellen Zyklus zu in einem vorhergehenden Zyklus bzw. Bild erkannten Objekten erfolgen.

Insbesondere kann ein Prädiktionsverfahren verwendet werden, bei dem auf der Basis der Lage wenigstens eines Objekts in einem früheren, insbesondere in einem vorhergehenden Zyklus und dessen Geschwindigkeit eine Lage in dem aktuellen Zyklus prädiziert wird und in der Umgebung der prädizierten Lage nach dem Objekt gesucht wird. Neue Objekte können aus Teilen eines Bildes, d.h. Bildpunkten oder in dem Zyklus ermittelte Mengen von Bildpunkten, insbesondere Segmente, gebildet werden, die nicht bereits bekannten Objekten zugeordnet werden konnten.

Nun ist es abweichend von konventionellen Objekterkennungs- und -verfolgungsverfahren vorgesehen, dass während wenigstens eines aktuellen Zyklus auf der Basis der Ergebnisse einer wenigstens vorläufigen Auswertung eines aktuellen Bildes wenigstens einem in dem aktuellen Zyklus ermittelten Teil eines aktuellen Bildes oder einem in dem aktuellen Zyklus erkannten Objekt wenigstens ein Teil eines früheren Bildes und/oder wenigstens eine Angabe in Bezug auf einen früheren Zustand des Objekts oder eines diesem entsprechenden Gegenstands, die auf der Basis eines entsprechenden früheren Bildes ermittelt wird, zugeordnet wird.

Werden dabei mehrere im Wesentlichen synchron erfasste Bilder gleichen oder verschiedenen Typs verwendet, genügt es, dass eine vorläufige Auswertung eines dieser Bilder erfolgt, die Zuordnung kann zu Teilen des gleichen oder eines anderen, im Wesentlichen synchron erfassten Bildes erfolgen.

Dies bedeutet, dass in einem aktuellen Zyklus nicht nur ein aktuelles Bild ausgewertet wird. Vielmehr wird zunächst die wenigstens vorläufige bzw. gegebenenfalls teilweise Auswertung eines aktuellen Bildes in dem aktuellen Zyklus durchgeführt. Auf der Basis dieser wenigstens vorläufigen Auswertung, d.h. insbesondere in Abhängigkeit von dem Resultat der wenigstens vorläufigen Auswertung, wird dann zur Objektverfolgung bzw. Ermittlung von Daten in Bezug auf ein Objekt ein früheres Bild verwendet, bei dem es sich insbesondere um ein unmittelbar vor dem aktuellen Bild erfasstes Bild, das einem vorhergehenden Zyklus zugeordnet ist, handeln kann.

Bei der vorläufigen Auswertung kann insbesondere wenigstens ein Kriterium überprüft werden, an Hand dessen entschieden wird, ob ein früheres Bild verwendet werden soll oder nicht. Das bedeutet dann, dass bei Nichterfüllung des Kriteriums eine sonst bekannte Objekterkennung und -verfolgung erfolgen kann.

Bei der wenigstens vorläufigen Auswertung wird ein Teil eines aktuellen Bildes ermittelt, bei dem es sich um einen Bildpunkt oder eine in dem aktuellen Zyklus ermittelte Menge von Bildpunkten, beispielsweise wenigstens ein Segment, handeln kann. Werden in einem aktuellen Zyklus mehrere aktuellen Bilder verwendet, braucht dabei das Bild, das vorläufig ausgewertet wurde, nicht unbedingt mit dem Bild übereinzustimmen, von dem ein Teil ermittelt wird. Es kann jedoch auch ein Objekt in dem aktuellen Bild erkannt und verwendet werden. Sowohl die Ermittlung des Teils des Bildes als auch die Erkennung des Objekts kann dabei zunächst mit Verfahrensschritten erfolgen, die denen in konventionellen Verfahren gleichen.

Dem bei der wenigstens vorläufigen Auswertung ermittelten Teil des aktuellen Bildes oder dem Objekt in dem aktuellen Zyklus kann dann ein Teil des früheren Bildes zugeordnet werden, bei dem es sich wiederum um einen Bildpunkt oder eine in dem aktuellen Zyklus ermittelte Menge von Bildpunkten, beispielsweise wenigstens ein Segment, des früheren Bildes handeln kann. Dabei können die Teile der Bilder jeweils unterschiedliche Anzahlen von Bildpunkten aufweisen, so dass keine Einszu-Eins-Zuordnung von Bildpunkten gegeben zu sein braucht. Für beliebige erste und/oder zweite Objekte und/oder Teile von ersten und/oder zweiten Bildern wird dabei unter einer Zuordnung eines Teils eines ersten Bildes oder eines ersten Objekts zu einem Teil eines zweiten Bildes oder einem zweiten Objekt verstanden, dass der Teil des zweiten Bildes oder das zweite Objekt vorgegeben wird, und dafür ein geeigneter Teil eines ersten Teils oder ein geeignetes erstes Objekt aus gegebenenfalls mehreren Alternativen ausgesucht und zugeordnet wird.

Dem Teil des aktuellen Bildes oder dem Objekt in dem aktuellen Zyklus kann jedoch auch eine Angabe zugeordnet werden, die sich auf das Objekt bzw. einen diesem entsprechenden Gegenstand bezieht. Bei dieser Angabe kann es sich um Werte beliebiger Zustandsgrößen eines Objekts bzw. Gegenstands handeln, beispielsweise die Lage, Geschwindigkeit, Form, Größe, Zuordnung zu einer von mehreren Objektklassen, in die Objekte gemäß ihren für die Objektverfolgung relevanten typischen Eigenschaften eingeordnet werden, oder auch die Präsenz des Gegenstands überhaupt. Zur Ermittlung der Angabe braucht dabei nicht das gesamte frühere Bild verwendet zu werden, vielmehr kann sich die Ermittlung auch nur auf Teilbereiche beschränken. Jedoch wird zur Ermittlung immer unmittelbar wenigstens ein Bildpunkt des früheren Bildes, das dazu vorzugsweise noch während des aktuellen Zyklus gespeichert sein kann, und gleichzeitig das Ergebnis der wenigstens vorläufigen Auswertung des aktuellen Bildes verwendet.

In jedem Fall ist es wesentlich, dass ein Teil des früheren Bildes bzw. eine aus dem früheren Bild gewonnene Angabe einem Teil des aktuellen Bildes oder einem Objekt des aktuellen Zyklus zugeordnet werden und nicht Teile des aktuellen Bildes Objekten oder Angaben, die aus dem früheren Bild gewonnen wurden.

Dies bedeutet insgesamt, dass zur Objektverfolgung je nach vorläufiger Auswertung Informationen aus einem aktuellen Bild zu einer erneuten und verbesserten wenigstens teilweisen erneuten Auswertung des früheren Bildes verwendet werden, deren Ergebnisse wiederum im aktuellen Zyklus verwendet werden. Hierdurch kann in den Bildern enthaltene Information besser ausgewertet werden, was eine schnellere und genauere Objekterkennung und -verfolgung erlaubt.

Die durch das Verfahren ermittelten Daten können dann ausgegeben oder gespeichert werden, um von nachfolgenden Einrichtungen, beispielsweise zur Steuerung eines Fahrzeugs verwendet zu werden.

Zur Durchführung der einzelnen Verfahrensschritte ist in der Vorrichtung eine Datenverarbeitungseinrichtung vorgesehen, die mit dem Sensor für elektromagnetische Strahlung zur Übertragung von Bildern verbunden ist. Die Datenverarbeitungseinrichtung kann dabei ganz oder teilweise als nicht programmierbare Schaltung ausgebildet sein, was die Ausführungsgeschwindigkeit erhöht. Vorzugsweise weist die Datenverarbeitungseinrichtung jedoch einen zur Durchführung des erfindungsgemäßen Verfahrens programmierbaren Prozessor und damit verbunden eine Speicher, eine Ausgabeschnittstelle und eine Eingabeschnitte zu dem Sensor auf.

Insbesondere können Mittel zur Auswertung aktueller Bilder des Sensors, Mittel zur Ermittlung von Teilen eines aktuellen Bildes als Ergebnis einer wenigstens vorläufigen Auswertung des aktuellen Bildes oder zur Erkennung eines Objekts in dem aktuellen Zyklus und/oder zur Zuordnung von Teilen eines früheren Bildes oder Mittel zur Ermittlung wenigstens einer Angabe in Bezug auf einen früheren Zustand des Objekts oder eines diesem entsprechenden Gegenstands auf der Basis eines entsprechenden früheren Bildes und Zuordnung der Angabe zu dem Teil des aktuellen Bildes oder dem aktuellen Objekt umfasst, vorgesehen sein, die ganz oder teilweise als nicht frei programmierbare elektrische Schaltung ausgebildet sein können, vorzugsweise jedoch durch einen entsprechend programmierten Prozessor gebildet werden.

Weiterbildungen und bevorzugte Ausführungsformen sind in der Beschreibung und den Zeichnungen beschrieben.

Als Sensor kann ein Sensor für beliebige elektromagnetische Strahlung verwendet werden. Bei einer bevorzugten Ausführungsform der Vorrichtung wird als Sensor wenigstens ein Radarsensor, insbesondere ein ortsauflösender Radarsensor, verwendet. Dementsprechend werden bei dem Verfahren vorzugsweise ortsaufgelöste Bilder eines Radarsensors verwendet. Radarsensoren können insbesondere Radialgeschwindigkeiten von Gegenständen relativ zu dem Radarsensor unmittelbar erfassen.

Vorzugsweise wird jedoch wenigstens ein Sensor für optische Strahlung, d.h. Strahlung im infraroten, sichtbaren oder auch ultravioletten Bereich des elektromagnetischen Spektrums, verwendet. Solche Sensoren weisen im Allgemeinen eine bessere Ortsauflösung auf als Radarsensoren.

Besonders bevorzugt werden Sensoren zur Erfassung von Entfernungsbildern verwendet. Beispielsweise kann ein Stereovideokamerasystem mit wenigstens zwei Videokameras verwendet werden, die in einer Ebene, in der eine Entfernung von dem Stereovideokamerasystem erfasst wird, beabstandet angeordnet sind. Vorzugsweise werden jedoch Sensoren verwendet, bei denen wenigstens ein Abtaststrahl mit elektromagnetischer Strahlung zur Abtastung wenigstens einer Abtastebene verwendet wird. Dabei können mehrere Abtaststrahlen zur im Wesentlichen gleichzeitigen Abtastung von Streifen in einer Abtastebene verwendet werden oder es kann, vorzugsweise, ein Abtaststrahl in der Abtastebene geschwenkt werden, wobei jeweils von Gegenständen zurückgeworfene Strahlung mit einem entsprechenden Detektor empfangen wird. Insbesondere können entsprechende Laserscanner verwendet werden, mittels derer wenigstens ein gepulstes Laserstrahlungsbündel über einen Erfassungsbereich schwenkbar, von einem Gegenstand zurückgeworfene Strahlung des gepulsten Laserstrahlungsbündels empfangbar und anhand der Laufzeit eines Pulses des Laserstrahlungsbündels zu dem Gegenstand und zurück zu dem Laserscanner eine Entfernung des Gegenstands winkelaufgelöst ermittelbar ist. Solche Laserscanner zeichnen sich durch eine gute Ortsauflösung bei gleichzeitig hoher Erfassungsrate aus. Besonders bevorzugt werden Laserscanner verwendet, die mehrere fächerartig übereinander angeordnete Abtastebenen abtasten.

Weiterhin ist es bevorzugt, dass bei dem Verfahren Videobilder verwendet werden und dass die Vorrichtung zur Erfassung von Videobildern ein Videosystem aufweist, das wenigstens eine Videokamera umfassen kann, die eine abbildende Optik und ein Sensorsystem zum ortsaufgelösten Empfang von optischer Strahlung, beispielsweise von sichtbarem Licht und/oder infraroter Strahlung, aufweist. Als Videokamera kann je nach Anwendung insbesondere eine Weitwinkel- oder eine Panoramakamera zum Einsatz kommen. Zur Überwachung des Fernbereichs ist eine Videokamera mit einem Teleobjektiv besonders geeignet. Es können grundsätzlich auch Videokameras mit Zoom-Objektiven verwendet werden. Weiterhin kann als Sensorsystem ein Schwarz-Weiß- bzw. Graustufensystem oder auch ein farbempfindliches System zum Einsatz kommen. Dabei können beispielsweise entsprechende CCD- oder CMOS- Sensorelemente verwendet werden.

Weiterhin können auch Kombinationen von Sensoren für elektromagnetische Strahlung eingesetzt werden, die gleiche oder verschiedene Typen von Bildern erfassen. Die Erfassungsbereiche der Sensoren brauchen dabei nicht identisch zu sein, es genügt, dass diese sich im Überwachungsbereich überschneiden.

Um die Objekterkennung und -verfolgung in dem aktuellen Zyklus zu verbessern, ist es bevorzugt, dass die Zuordnung des Teils des früheren Bildes oder der Angabe in Bezug auf den früheren Zustand des Objekts zur Ermittlung einer weiteren Angabe in Bezug auf den aktuellen Zustand eines Objekts verwendet wird. Die ermittelte weitere Angabe braucht sich dabei nicht auf das Objekt zu beziehen, für das die Angabe in Bezug auf dessen früheren Zustand ermittelt wurde. Vielmehr kann es sich um ein beliebiges Objekt des aktuellen Zyklus handeln. Es ergibt sich somit gewissermaßen ein wenigstens abschnittsweise rekursiv arbeitendes Verfahren, bei dem ausgehend von Information aus der wenigstens vorläufigen Auswertung eines aktuellen Bildes zunächst neue Information über ein Objekt bzw. einen Gegenstand zu einem einem früheren Bild entsprechenden Zeitpunkt gewonnen wird, die wiederum zur Auswertung des aktuellen Bildes herangezogen wird. Damit wird die vorhandene Information in den Bildern wesentlich effektiver ausgenutzt als bei ausschließlich linear arbeitenden Verfahren.

Insbesondere bei der Behandlung neu erkannter Objekte ist es bevorzugt, dass, wenn in einem aktuellen Zyklus ein neues Objekt erkannt wird, eine aktuelle Lage des neuen Objekts in dem aktuellen Zyklus ermittelt wird, dass auf der Basis der aktuellen Lage des neuen Objekts eine frühere Lage des neuen Objekts in einem früheren Zyklus geschätzt wird, und dass unter Verwendung der geschätzten früheren Lage des neuen Objekts der aktuelle Wert einer Zustandsgröße des neuen Objekts in dem aktuellen Zyklus ermittelt wird. Insbesondere kann als Zustandsgröße die Geschwindigkeit des Objekts geschätzt werden, die ansonsten auf der Basis nur eines Bildes nicht ermittelbar ist.

Dafür, dass ein Objekt in dem früheren Zyklus zunächst nicht erkannt wurde, können mehrere Gründe vorliegen. Bei einer Weiterbildung des Verfahrens ist es daher bevorzugt, dass auf der Basis der aktuellen Lage des neuen Objekts in dem aktuellen Zyklus und einer früheren Lage wenigstens eines anderen Objekts in einem früheren Zyklus geprüft wird, ob in dem in dem früheren Zyklus ausgewerteten Bild der dem neuen Objekt entsprechende Gegenstand durch einen dem anderen Objekt in dem früheren Zyklus entsprechenden Gegenstand verdeckt sein konnte. Unter Verdeckung wird dabei verstanden, dass Gegenstandspunkte des verdeckten Gegenstands von dem verwendeten Sensor nicht erfassbar waren, da Bereiche des anderen Gegenstands im Ausbreitungsweg der elektromagnetischen Strahlung von den Gegenstandspunkten zu dem Sensor angeordnet waren. Diese Weiterbildung erleichtert zum einen die Verdeckungserkennung im vorhergehenden Zyklus und erlaubt durch Abschätzung der Größe und Lage des verdeckten Anteils des Erfassungsbereichs eine Schätzung der Lage eines dem neuen Objekt entsprechenden Gegenstands zur Zeit des früheren Bildes.

Dabei ist es besonders bevorzugt, dass für das neue Objekt in dem aktuellen Zyklus eine aktuelle Größe und/oder Form ermittelt wird, und dass die aktuelle Größe und/oder Form bei der Prüfung auf Verdeckung verwendet werden. Hierdurch kann beispielsweise sichergestellt werden, dass eine Verdeckung nur erkannt wird, wenn eine von dem Sensor erfassbare Silhouette bzw. ein von dem Sensor erfassbarer Umriss des neuen Objekts bzw. des entsprechenden Gegenstands aus der Sicht des Sensors kleiner ist als der entsprechende Umriss bzw. die entsprechende Silhouette des anderen Gegenstands. Darüber hinaus kann die Größe und/oder Form des neuen Objekts dazu dienen, dieses zunächst in eine von mehreren Objektklassen einzuordnen, die jeweils Gegenstände mit für die Objekterkennung und Verfolgung charakteristischen Eigenschaften umfassen. Beispielsweise können Objektklassen für Fußgänger, Kraftfahrzeuge, Fahrbahnbegrenzungen oder ähnliches vorgesehen sein. In Abhängigkeit von den Objektklassen kann dann abgeschätzt werden, ob der Gegenstand sich in der vorhandenen Zeit zwischen der Erfassung des aktuellen Bildes und des früheren Bildes mit der maximal für Gegenstände der betreffenden Objektklasse möglichen Geschwindigkeit aus einem durch den anderen Gegenstand verdeckten Bereich in die erfasste Lage bewegt haben könnte.

Aus der durch die Auswertung des aktuellen Bildes in dem aktuellen Zyklus gewonnenen Information, dass ein neues Objekt in den Erfassungsbereich vorhanden ist, kann also durch die Verdeckungsüberprüfung festgestellt werden, ob ein diesem neuen Objekt entsprechender Gegenstand bereits zu einer vorhergehenden Zeit in den Erfassungsbereich des Sensors vorhanden war. Insbesondere in diesen Fall ist es bevorzugt, dass bei Annahme einer Verdeckung aus der aktuellen Lage und vorzugsweise der aktuellen Größe und/oder Form des dem verdeckenden Gegenstand entsprechenden Objekts eine frühere Lage des dem neuen Objekt entsprechenden Gegenstands in dem früheren Zyklus und hieraus eine aktuelle Geschwindigkeit des neuen Objekts geschätzt wird. Die in dem aktuellen Zyklus gewonnene Information über das neue Objekt in dem früheren Zyklus kann also dazu verwendet werden, dessen Geschwindigkeit als Zustandsgröße in dem aktuellen Zyklus sowohl von der Richtung als auch von der Größe her abzuschätzen. Dies ist beispielsweise besonders hilfreich, um von parkenden Autos verdeckte Fußgänger, die plötzlich hinter dem Fahrzeug hervortreten, schnell erkennen und dann gegebenenfalls auch darauf reagieren zu können.

Ein in einem aktuellen Bild neu erkanntes Objekt kann jedoch auch aus einem anderen Grund als einer Verdeckung in dem früheren Zyklus nicht erkannt worden sein. So ist es bevorzugt, dass in einem früheren Bild nach dem neuen Objekt gesucht wird, und dass bei Auffinden des Objekts in dem früheren Bild in dem aktuellen Zyklus ein aktueller Wert wenigstens einer Zustandgröße für das Objekt und/oder ein anderes Objekt unter Verwendung eines früheren Wertes der Zustandsgröße für das neue Objekt und/oder das andere Objekt in dem früheren Zyklus ermittelt wird. Die Suche kann dabei zum einen dadurch erleichtert werden, dass Eigenschaften des Objekts, beispielsweise dessen Größe und/oder Umriss oder Form aus dem aktuellen Zyklus bereits bekannt sind. Zum anderen kann verwendet werden, dass in dem früheren Bild das neue Objekt vorhanden gewesen sein muss, so dass bei der Auswertung des früheren Bildes in dem früheren Zyklus gegebenenfalls vorhandene Unsicherheiten bei der Zuordnung von Teilen eines Bildes, beispielsweise Bildpunkten oder Segmenten, zu Objekten ausgeräumt werden können.

Eine solche Unsicherheit kann insbesondere dann auftreten, wenn in dem früheren Bild eigentlich zwei verschiedenen Gegenständen zugehörige Gegenstandspunkte bzw. -bereiche als einem Objekt zugehörig erkannt werden. Findet sich das neue Objekt in dem früheren Bild wieder, können so Informationen sowohl über das neue Objekt bzw. den diesem entsprechenden einen Gegenstand als auch ein dem anderen Gegenstand entsprechendes anderes, nun für den früheren Zyklus neu bestimmtes Objekt gewonnen werden. Insbesondere können für das neue Objekt oder das andere Objekt als Zustandsgröße in dem früheren Zyklus deren Lagen und gegebenenfalls Größen und/oder Formen ermittelt werden. Unter Verwendung entsprechender Daten für den aktuellen Zyklus kann dann zum einen für das in dem aktuellen Zyklus zunächst neue Objekt bereits eine Geschwindigkeit ermittelt werden und zum anderen für das andere Objekt, das dem anderen Gegenstand in dem vorhergehenden Zyklus entspricht, eine genauere Geschwindigkeit bestimmt werden.

Durch Verwendung des Verfahrens gemäß dieser Weiterbildung können insbesondere sehr einfach beispielsweise Fußgänger erkannt werden, die sich aus Sicht des Sensors unmittelbar vor einem Gegenstand am Fahrbahnrand aufgehalten haben und dann auf die Fahrbahn getreten sind. Unmittelbar mit Erkennung des Fußgängers in einem aktuellen Bild kann dann durch die zeitliche Rückverfolgung dessen Geschwindigkeit sowohl in Bezug auf deren Größe als auch deren Richtung abgeschätzt werden, so dass wertvolle Zeit bei der Erkennung des Fußgängers gewonnen werden kann.

Die Suche nach dem neuen Objekt in dem früheren Bild kann auf unterschiedliche Art und Weise erfolgen. Bei einer Weiterbildung des Verfahrens ist es bevorzugt, dass die Bilder mit einem vorgegebenen Segmentierungsverfahren und mit wenigstens einem entsprechenden vorgegebenen Segmentierungsparameter segmentiert werden, und dass zum Auffinden des neuen Objekts in dem früheren Bild wenigstens ein entsprechender Bereich des frühere Bildes mit einem anderen Segmentierungsverfahren und/oder mit einem veränderten Segmentierungsparameter erneut segmentiert wird. In der Folge kann eine neue Zuordnung der neu ermittelten Segmente zu entsprechenden Objekten erfolgen. Die Neusegmentierung braucht dabei nicht für das gesamte Bild zu erfolgen, sondern kann sich vorzugsweise nur auf den durch die Lage des neuen Objekts in dem aktuellen Zyklus und entsprechender, nahegelegener anderer Objekte in Abhängigkeit von deren Geschwindigkeiten bestimmten Bereich erstrecken, so dass die Erkennung anderer Objekte nicht beeinträchtigt wird. Sowohl das verwendete Segmentierungsverfahren als auch die gegebenenfalls geänderten Segmentierungsparameter können dabei insbesondere situativ angepasst sein, d.h. in Abhängigkeit von den Lagen, Typen bzw. Größen und/oder auch der Anzahl der entsprechenden Bildpunkte des neuen Objekts und des jeweils anderen Objekts gewählt sein.

Bei einer bevorzugten Weiterbildung des Verfahrens werden zeitlich einander zugeordnete Entfernungs- und Videobilder verwendet, die beispielsweise durch einen Laserscanner zur Erfassung von Entfernungsbildern und eine Videokamera zur Erfassung von Videobildern oder auch durch ein Videosystem zur Erzeugung von Stereobildern mit wenigstens zwei voneinander beabstandet angeordneten, miteinander gekoppelten Videokameras erfasst werden können. Wird beispielsweise die Videobildverarbeitung zur Verringerung des Verarbeitungsaufwands durch eine Auswertung entsprechender Entfernungsbilder gesteuert, d.h. erfolgt eine Aufmerksamkeitssteuerung der Videobildverarbeitung durch den Laserscanner, wird nur in denjenigen Bereichen des Videobildes nach Merkmalen und/oder Objekten gesucht, die Abschnitte umfassen, in denen in dem entsprechenden Entfernungsbild Gegenstandspunkten bzw. -bereichen entsprechende Bildpunkte detektiert wurden. Insbesondere können die Bereiche durch in einer Richtung orthogonal zu einer Abtastebene verlaufende Streifen gebildet sein, deren Schnitt mit dem Erfassungsbereich des Sensors zur Erfassung der Entfernungsbilder in seiner Lage und Breite durch wenigstens einen Entfernungsbildpunkt oder mehrere Entfernungsbildpunkte definiert ist. Ein Gegenstand wird in dem Videobild erst detektiert, wenn er in den Erfassungsbereich des Sensors zur Erfassung der Entfernungsbilder eintritt. Wird beispielsweise zur Erfassung der Entfernungsbilder ein Laserscanner verwendet, der mittels eines in einer Abtastebene geschwenkten Laserstrahls eine Ebene des Erfassungsbereichs abtastet, kann ein Gegenstand in einem Videobild erkennbar sein, obwohl dieser noch nicht in dem Entfernungsbild, beispielsweise infolge von Verdeckung auf Höhe der Abtastebene, erkennbar ist.

Es ist daher bevorzugt, dass zeitlich einander zugeordnete Entfernungs- und Videobilder wenigstens eines gemeinsamen Teilbereichs des Erfassungsbereichs verwendet werden, dass in Videobildern nach Objekten und/oder Merkmalen nur in Teilabschnitten gesucht wird, die in Abhängigkeit von zeitlich zugeordneten Entfernungsbildpunkten bestimmt werden, dass in einem aktuellen Zyklus bei Erkennung eines neuen Objekts und/oder Merkmals das neue Objekt und/oder Merkmal in dem Videobild zeitlich zu einem früheren Zyklus zurückverfolgt wird, und dass eine Lage des dem neuen Objekt und/oder Merkmal entsprechenden Gegenstands in dem früheren Zyklus unter Verwendung der Information über ein dem Gegenstand entsprechendes Objekt und/oder Merkmal in dem früheren Videobild ermittelt wird. Die dabei verwendeten zeitlich einander zugeordneten Entfernungs- und Videobilder sind vorzugsweise im Wesentlichen synchron erfasst, d.h. ihre Erfassungszeiten unterscheiden sich um eine kleinere Zeitspanne als die zwischen aufeinanderfolgenden Abtastungen durch den Sensor mit der geringsten Erfassungsrate. Die Teilabschnitte können dabei insbesondere durch Bereiche vorgegebener Form und Größe um die Entfernungsbildpunkte, vorzugsweise die zuvor erwähnten Streifen orthogonal zu einer Abtastebene, gegeben sein. Für Entfernungsbildpunkte in dem Entfernungsbild kann in dem entsprechenden Teilabschnitt des Videobildes also nach wenigstens einem entsprechenden Merkmal oder einem ganzen Objekt in dem Videobild gesucht werden. Bei Verwendung nur von Merkmalen ist die Rückverfolgung in der Regel schneller durchführbar. Die Ermittlung der Lage des dem neuen Objekt bzw. Merkmals entsprechenden Gegenstands in dem früheren Zyklus kann insbesondere durch eine Schätzung erfolgen, der vorzugsweise die Lage des entsprechenden Merkmals und/oder Objekts in dem Videobild zugrunde liegt. Weiterhin kann aus der Lage des dem neuen Objekt bzw. Merkmal entsprechenden Gegenstands in dem früheren Zyklus und der Lage des neuen Objekts bzw. Merkmals in dem aktuellen Zyklus dessen Geschwindigkeit im aktuellen Zyklus ermittelt werden. Bei dieser Verfahrensvariante kann insbesondere ausgenutzt werden, dass mit einer Videokamera häufig schon Gegenstände erkennbar sein können, wenn diese in den Entfernungsbildern, die den meist nur in der Höhe geringer ausgedehnten, d.h. flacheren Erfassungsbereich wiedergeben, noch nicht, beispielsweise durch Verdeckung auf der Höhe im Erfassungsbereich des Sensors für die Entfernungsbilder erkennbar sind. Tritt ein Gegenstand in dem Entfernungsbild erstmals auf, ist es so möglich, ein diesem entsprechendes Merkmal in dem vorhergehenden Zyklus in dem Videobild zu erkennen, wenn der Gegenstand nur in dem Entfernungsbild, nicht aber in dem Videobild verdeckt war. Eine Geschwindigkeit des Gegenstands kann dann auf der Basis der Lage des Merkmals in den Videobildern ermittelt werden. Das Auftreten von "blinde Flecken" der Videobildverarbeitung, die durch die Aufmerksamkeitssteuerung bedingt sind, kann so ohne erheblichen Aufwand eingeschränkt werden.

Einer anderen Ausführungsform des Verfahrens entspricht das erfindungsgemäße Verfahren, das in Anspruch 1 definiert wird. Bei diesem Verfahren werden zeitlich einander zugeordnete Entfernungs- und Videobilder wenigstens eines gemeinsamen Teilbereichs des Erfassungsbereichs verwendet, Entfernungsbildpunkten in einem früheren Entfernungsbild Entfernungsbildpunkte in einem aktuellen Entfernungsbild zugeordnet, indem für wenigstens einen einem Entfernungsbildpunkt in dem früheren Entfernungsbild entsprechenden Bereich und/oder wenigstens ein einem Entfernungsbildpunkt in dem früheren Entfernungsbild entsprechendes Merkmal des entsprechenden früheren Videobildes und/oder des aktuellen Videobildes eine Verschiebung und/oder Verschiebungsgeschwindigkeit, insbesondere ein optischer Fluss, ermittelt wird und die Verschiebung bzw. Verschiebungsgeschwindigkeit, insbesondere der optische Fluss, zur Zuordnung eines Entfernungsbildpunktes in dem aktuellen Entfernungsbild zu dem Entfernungsbildpunkt in dem früheren Entfernungsbild verwendet wird, wobei für Objekte in dem Entfernungsbild, die sich einem die Entfernungsbilder erfassenden Sensor nähern und/oder in einem aktuellen Zyklus mehr Entfernungsbildpunkte aufweisen als in einem früheren Zyklus, Entfernungsbildpunkten in dem aktuellen Zyklus unter Verwendung der entsprechenden Verschiebung bzw. Verschiebungsgeschwindigkeit des Bereichs bzw. Merkmals, insbesondere des entsprechenden optischen Flusses, Entfernungsbildpunkte in dem vorhergehenden Zyklus zugeordnet werden. Bei dieser Ausführungsform werden Informationen aus Entfernungsbildern mit Informationen aus entsprechenden Videobildern verknüpft, wodurch zu wenigstens einem Entfernungsbildpunkt zusätzlich Daten erhalten werden, die bei der Verarbeitung der Entfernungsbildpunkte verwendet werden können. Dabei wird insbesondere ausgenutzt, dass bei einer Bewegung eines Gegenstands in der Regel in dem Entfernungsbild und dem Videobild erfasste Bereiche auf dem Gegenstand mitbewegt werden. Weisen die Bereiche in dem Videobild einen Intensitätsverlauf bzw. entsprechende Merkmale auf, äußert sich die Bewegung des Gegenstands näherungsweise als Verschiebung der entsprechenden Intensitätsverläufe bzw. Merkmale in dem Videobild. Unter einer Verschiebung wird dabei eine Verschiebung zwischen aufeinander folgenden Zyklen verstanden, die jedoch nicht unbedingt unmittelbar aufeinander zu folgen brauchen. Die Bewegungsinformation aus den Videobildern kann dann den entsprechenden Bereichen des Gegenstands bzw. entsprechenden Entfernungsbildpunkten zugeordnet werden.

Vorzugsweise wird zur Bestimmung der Verschiebung bzw. Verschiebungsgeschwindigkeit des Bereichs ein entsprechender optischer Fluss ermittelt. Bei der zur Definition des optischen Flusses verwendeten Fläche kann zum einen eine Bildebene verwendet werden, in der die Videobildpunkte des dann ebenfalls in der Ebene definierten Videobildes liegen. Vorzugsweise wird jedoch eine Fläche verwendet, die im Rahmen eines Kameramodells zur Behandlung eines Videobildes verwendet wird. Grundsätzlich genügt es, wenn für wenigstens einen Entfernungsbildpunkt ein optischer Fluss ermittelbar ist. Im allgemeinen kann nämlich der Fall auftreten, dass Entfernungsbildpunkte auf Gegenstandsflächen erfasst werden, die keine Intensitätsstruktur aufweisen und für die daher auch ein optischer Fluss nicht ermittelbar ist. Der optische Fluss ist beispielsweise dann vollständig ermittelbar, wenn der entsprechende Bereich des Videobildes in zwei linear voneinander unabhängigen Richtungen eine Änderung der Intensität aufweist. Vorzugsweise erfolgt eine entsprechende Verfolgung daher anhand dieser Bereiche.

Verfahren zur Berechnung des optischen Flusses sind grundsätzlich bekannt und beispielsweise in dem Artikel "The computation of optical flow" von J. L. Barren und S. S. Beauchemin in ACM Computing Survey, Vol. 27, Nr. 3, S. 433 - 467 (1995) und in dem Artikel "Performance of optical flow techniques" von J. L. Barren, D. J. Flied, D. J. und S.S. Beauchemin in International Journal of Computervision, 12 (1), S. 43 - 77 (1994) beschrieben.

Der optische Fluss braucht dabei nicht unbedingt für das ganze Videobild berechnet zu werden. Es genügt vielmehr, diesen für den den Entfernungsbildpunkt entsprechenden Gegenstandspunkt bzw. - soweit notwendig - dessen Umgebung zu ermitteln. Der Ort in der zur Definition des optischen Flusses verwendeten Fläche, für den der optische Fluss berechnet werden muss, ist aus den Lagekoordinaten des Entfernungsbildpunktes, der Relativlage des zur Erfassung der Entfernungsbilder verwendeten Sensors zu dem zur Erfassung der Videobilder verwendeten Videosystems, der Abbildungsgeometrie des Videosystems bzw. einer Videokamera darin bzw. eines Modells für diese und der vorgegebenen Fläche, auf der der optische Fluss ermittelt werden soll, ableitbar. Dabei kann als Ort ein entsprechender Videobildpunkt verwendet werden, es ist jedoch auch möglich, den optischen Fluss subpixelgenau an Orten zwischen Videobildpunkten bzw. Pixeln des Videobildes zu ermitteln. Die Verfolgung von Entfernungsbildpunkten unter Zuhilfenahme des optischen Flusses, bei der Entfernungsbildpunkten in einem früheren Zyklus Entfernungsbildpunkte in einem späteren Zyklus zugeordnet werden, ist in der von der Anmelderin eingereichten deutschen Patentanmeldung mit dem amtlichen Aktenzeichen DE 103 12 249 beschrieben. Dort werden Entfernungsbilder als tiefenaufgelöste Bilder bezeichnet.

Dieses für sich von dem Sensor entfernende Objekte oder Objekte mit einer nicht größeren Anzahl von Entfernungsbildpunkten im aktuellen Zyklus verwendete Verfahren hat daher den Vorteil, dass eine Prädiktion der Objektlagen nicht zu erfolgen braucht, da die Verwendung der Verschiebung bzw. des optischen Flusses eine Verfolgung einzelner Entfernungsbildpunkte erlaubt. Das umgekehrte Vorgehen bei sich nähernden Objekten oder Objekten, die in dem aktuellen Zyklus mehr Entfernungsbildpunkte aufweisen als in einem früheren Zyklus, hat zum einen den Vorteil, dass eine Zuordnung einer größeren Anzahl von Entfernungsbildpunkten zu einer geringeren Anzahl von Entfernungsbildpunkten, insbesondere in Situationen, in denen Objekte in dem aktuellen Zyklus nahe zueinander benachbart sind, mit größerer Sicherheit richtig erfolgen kann. Zum anderen kann dem entsprechenden Objekt eine genauere Geschwindigkeit zugeordnet werden, da zur Ermittlung der Geschwindigkeit des Objekts eine Mittelung über entsprechende Geschwindigkeiten einander zugeordneter Entfernungsbildpunkte verwendet werden kann und in dem aktuellen Zyklus eine größere Anzahl solcher Entfernungsbildpunkte zur Verfügung steht.

Bei einer anderen Weiterbildung des Verfahrens ist es bevorzugt, dass die Objekterkennung und -verfolgung auf der Basis von Videobildern erfolgt, und dass bei der Objekterkennung die Detektion von Objekten auf der Basis von gefilterten Videobildern erfolgt, die durch die Filterung eine reduzierte Auflösung aufweisen, und dass nach Detektion eines Objekts in dem aktuellen Zyklus auf der Basis der Lage und gegebenenfalls Form des Objekts in dem aktuellen gefilterten Videobild nach einem dem Objekt entsprechenden Gegenstand in einem früheren Videobild gesucht wird, dessen Auflösung höher ist als die des gefilterten Videobilds, und dass bei Auffinden eines entsprechenden Objekts in dem früheren Videobild entsprechende Daten über das Objekt bei der Auswertung des aktuellen Videobildes verwendet werden. Die Objekterkennung und -verfolgung kann dabei gegebenenfalls durch die Verwendung von Entfernungsbildern unterstützt werden. Bei dieser Weiterbildung werden, vorwiegend zur Einsparung von Rechenaufwand, zunächst erfasste Videobilder zur Reduktion der Auflösung einer Filterung unterzogen. Bei der Filterung kann es sich um beliebige Verfahren handeln, bei denen die Anzahl der Bildpunkte des Videobildes reduziert wird. Im einfachsten Fall kann beispielsweise einfach nur eine Unterabtastung des Bildes durchgeführt werden, bei der von quadratischen Blöcken von Bildpunkten bzw. Pixeln jeweils nur ein Bildpunkt bzw. Pixel stellvertretend für die ganze Anordnung verwendet wird. Nähert sich ein weit entferntes Objekt dem zur Erfassung des Videobildes verwendeten Sensor, kann der Fall eintreten, dass bei der ersten Detektion des Objekts nur sehr wenige Bildpunkte bzw. Pixel in dem gefilterten Videobild zur Verfügung stehen. Durch Analyse des früheren Bildes mit erhöhter Auflösung, kann gegebenenfalls das Objekt, das nur aufgrund der Filterung nicht in dem früheren Bild erkennbar war, nun erkannt werden, so dass dem neu erkannten Objekt in dem aktuellen Zyklus trotz der nur geringen Auflösung eine Trajektorie und Geschwindigkeit zugeordnet werden kann, ohne dass dazu ein erheblicher Rechenaufwand notwendig wäre.

Gegenstand der Erfindung ist auch ein Computerprogramm mit Programmcode-Mitteln, um das erfindungsgemäße Verfahren durchzuführen, wenn das Programm auf einem Computer ausgeführt wird.

Weiterer Gegenstand der Erfindung ist auch ein Computerprogrammprodukt mit Programmcodemitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung, insbesondere eine Datenverarbeitungseinrichtung der Vorrichtung verstanden, mit der das erfindungsgemäße Verfahren ausgeführt werden kann. Insbesondere kann diese einen digitalen Signalprozessor und/oder Mikroprozessor aufweisen, mit dem das Verfahren ganz oder in Teilen ausgeführt wird.

Die Erfindung ist vorzugsweise zur Überwachung von Bereichen mit beweglichen Gegenständen, insbesondere Straßenverkehr, geeignet, wobei die Erfassung der Bilder durch wenigstens einen ortsfesten Sensor und/oder einen an einem Fahrzeug gehaltenen Sensor erfolgen kann.

Die Erfindung wird nun weiter beispielhaft anhand der Zeichnungen erläutert. Es zeigen:
- Fig. 1: eine schematische Draufsicht auf ein Fahrzeug mit einer Vorrichtung zur Erkennung und Verfolgung von Objekten nach einer ersten bevorzugten Ausführungsform der Erfindung und einen vor dem Fahrzeug befindlichen Gegenstand,
- Fig. 2: ein Ablaufdiagramm, in dem schematisch der Ablauf eines Verfahrens nach einer ersten bevorzugten Ausführungsform der Erfindung veranschaulicht ist,
- Fig. 3A und 3B: Ausschnitte aus zu aufeinander folgenden Zeitpunkten erfassten Entfernungsbildern eines Erfassungsbereichs eines Laserscanners der Vorrichtung in Fig. 1 mit einem nur teilweise gezeigten Fahrzeug und einem sich bewegenden Fußgänger,
- Fig. 4: die Darstellung in Fig. 3B mit zusätzlichen Hilfslinien zur Erläuterung einer Berechnung der Lage bzw. Geschwindigkeit des Fußgängers,
- Fig. 5: ein Ablaufdiagramm, in dem schematisch der Ablauf eines Verfahrens nach einer zweiten bevorzugten Ausführungsform der Erfindung veranschaulicht ist,
- Fig. 6A bis 6G: Ausschnitte aus zeitlich aufeinanderfolgend erfassten Entfernungsbildern von Szenen mit einem nur teilweise gezeigten Fahrzeug und einem sich zeitweise vor dem Fahrzeug befindlichen, sich bewegenden Fußgänger,
- Fig. 7: eine schematische Draufsicht auf ein Fahrzeug mit einer Vorrichtung zur Erkennung und Verfolgung von Objekten nach einer zweiten bevorzugten Ausführungsform der Erfindung und einen vor dem Fahrzeug befindlichen Gegenstand,
- Fig. 8: eine schematische, teilweise Seitenansicht des Fahrzeugs und des Gegenstands in Fig. 7,
- Fig. 9: ein Ablaufdiagramm, in dem schematisch der Ablauf eines Verfahrens nach einer dritten bevorzugten Ausführungsform der Erfindung veranschaulicht ist;
- Fig. 10A und 10B: Ausschnitte aus einem Entfernungsbild und einem entsprechenden Videobild mit einem Fahrzeug und einem sich bewegenden Fußgänger zu einem ersten Erfassungszeitpunkt,
- Fig. 11A und 11B: den Bildern in den Fig. 10A und 10B entsprechende Entfernungs- bzw. Videobilder zu einem späteren Erfassungszeitpunkt,
- Fig. 12A und 12B: ein Ablaufdiagramm, in dem schematisch der Ablauf eines Verfahrens nach einer vierten bevorzugten Ausführungsform der Erfindung veranschaulicht ist,
- Fig. 13: eine schematische, perspektivische Darstellung eines Teils einer Abtastebene mit einem Entfernungsbildpunkt, einer Abbildungsgeometrie zur Berechnung eines optischen Flusses sowie bei Ablauf des Verfahrens in Fig. 12A und 12B auftretende Lagen von erfassten und prädizierten Entfernungsbildpunkten sowie von Videobildpunkten und einem einem optischen Fluss entsprechenden Verschiebungsvektor,
- Fig. 14: ein Ablaufdiagramm, in dem schematisch der Ablauf eines Verfahrens nach einer fünften bevorzugten Ausführungsform der Erfindung veranschaulicht ist,
- Fig. 15A, 15B: Ausschnitte aus einem ungefilterten und einem gefilterten Videobild mit einem schematisch dargestellten Fußgänger zu einem ersten Zeitpunkt, und
- Fig. 16: ein ungefiltertes Bild des Fußgängers in Fig. 15 zu einem früheren Zeitpunkt.

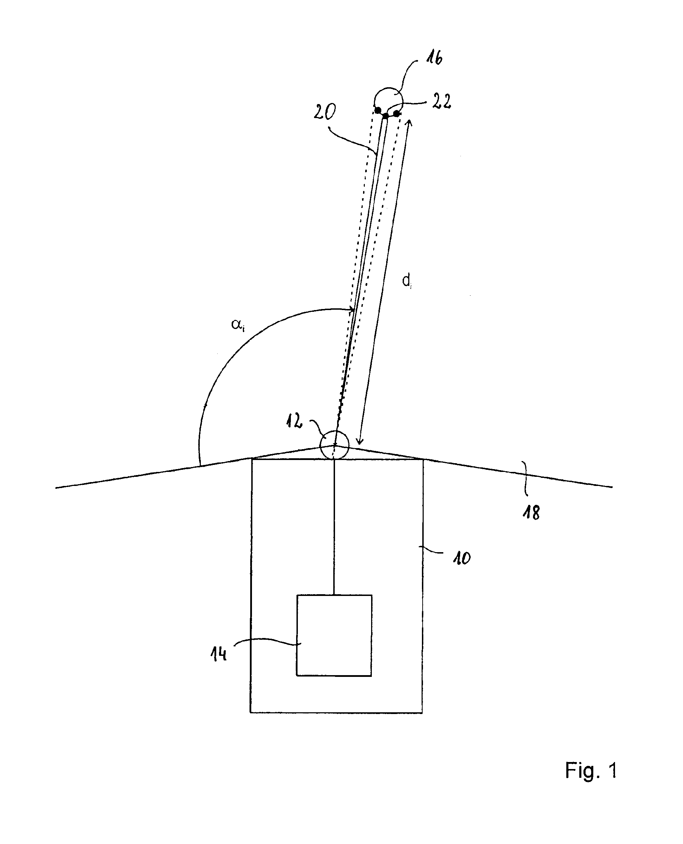

In Fig. 1 trägt ein Fahrzeug 10 an seiner Frontseite einen Laserscanner 12 sowie eine über eine Datenleitung mit dem Laserscanner 12 verbundene Datenverarbeitungseinrichtung 14, die zusammen mit dem Laserscanner 12 eine Vorrichtung zur Erkennung und Verfolgung von Objekten nach einer ersten bevorzugten Ausführungsform der Erfindung bildet. In Fahrtrichtung vor dem Fahrzeug befindet sich eine in Fig. 1 nur sehr schematisch gezeigte Person 16, die im Rahmen der Erfindung der Einfachheit halber als Gegenstand angesehen wird.

Mittels des Laserscanners 12 ist ein in Fig. 1 nur teilweise gezeigter Erfassungsbereich 18 abtastbar, der aufgrund der Anbaulage des Laserscanners 12 an der Frontseite des Fahrzeugs 10 symmetrisch zur Längsachse des Fahrzeugs 10 angeordnet ist und einen Winkel von etwas mehr als 180° abdeckt. Der Erfassungsbereich 18 ist in Fig. 1 nur schematisch und zur besseren Darstellung insbesondere in radialer Richtung zu klein dargestellt.

Der Laserscanner 12 tastet seinen Erfassungsbereich 18 in grundsätzlich bekannter Weise mit einem mit konstanter Winkelgeschwindigkeit umlaufenden, gepulsten Laserstrahlungsbündel 20 ab, wobei ebenfalls umlaufend in konstanten Zeitabständen Δt zu Zeiten τᵢ in festen Winkelbereichen um einen mittleren Winkel αᵢ detektiert wird, ob das Laserstrahlungsbündel 20 von einem Punkt 22 bzw. Bereich eines Gegenstands, beispielsweise der Person 16, reflektiert wird. Der Index i läuft dabei von 1 bis zur Anzahl der Winkelbereiche im Erfassungsbereich 18. Von diesen Winkelbereichen ist in Fig. 1 nur ein Winkelbereich gezeigt, der dem mittleren Winkel αᵢ zugeordnet ist. Hierbei ist der Winkelbereich allerdings zur deutlicheren Darstellung übertrieben groß gezeigt.

Bedingt durch die Schwenkung des Laserstrahlungsbündels 20 ist der Erfassungsbereich 18 bis auf die Aufweitung des Laserstrahlungsbündels 20 im Wesentlichen zweidimensional und bildet im Wesentlichen, d.h. bis auf den Durchmesser des Laserstrahlungsbündels 20, eine Abtastebene.

Anhand der Laufzeit eines von dem Laserscanner 12 abgegebenen Laserstrahlungspulses von dem Laserscanner 12 zu dem Gegenstandspunkt 22 und zurück zu dem Laserscanner 12 wird der Abstand dᵢ des Gegenstandspunktes 22 von dem Laserscanner 12 ermittelt. Der Laserscanner 12 erfasst daher als Koordinaten in einem dem Gegenstandspunkt 22 des Gegenstands bzw. der Person 16 entsprechenden Entfernungsbildpunkt den Winkel αᵢ und den bei diesem Winkel festgestellten Abstand dᵢ, d.h. die Position des Gegenstandspunkts 22 in Polarkoordinaten. Jedem erfassten Gegenstandspunkt ist daher ein Entfernungsbildpunkt zugeordnet.

Die Menge der bei der eine Abtastung erfassten Entfernungsbildpunkte bildet ein Entfernungsbild im Sinne der vorliegenden Anmeldung.

Der Laserscanner 12 tastet den Erfassungsbereich 18 jeweils in aufeinanderfolgenden Abtastungen mit Zeitabständen Δt ab, so dass eine zeitliche Folge von Abtastungen und entsprechenden Entfernungsbildern entsteht. Die Verarbeitung der Entfernungsbilder des Laserscanners 12 erfolgt durch die Datenverarbeitungseinrichtung 14.

Die Datenverarbeitungseinrichtung 14 verfügt dazu u.a. über einen zur Ausführung des erfindungsgemäßen Verfahrens mit einem entsprechenden erfindungsgemäßen Computerprogramm programmierten digitalen Signalprozessor und eine mit dem digitalen Signalprozessor verbundene Speichereinrichtung. Bei einer anderen Ausführungsform der Vorrichtung kann die Datenverarbeitungseinrichtung auch einen konventionellen Prozessor aufweisen, mit dem ein in der Datenverarbeitungseinrichtung gespeichertes erfindungsgemäßes Computerprogramm zur Ausführung des erfindungsgemäßen Verfahrens ausgeführt wird.

Die programmierte Datenverarbeitungseinrichtung stellt dabei im Sinne der Erfindung Mittel zur Auswertung aktueller Bilder des Sensors, Mittel zur Ermittlung von Teilen eines aktuellen Bildes als Ergebnis einer wenigstens vorläufigen Auswertung des aktuellen Bildes oder zur Erkennung eines Objekts in dem aktuellen Zyklus und Mittel zur Zuordnung von Teilen eines früheren Bildes und/oder zur Ermittlung wenigstens einer Angabe in Bezug auf einen früheren Zustand des Objekts oder eines diesem entsprechenden Gegenstands auf der Basis eines entsprechenden früheren Bildes und Zuordnung der Angabe zu dem Teil des aktuellen Bildes oder dem aktuellen Objekt bereit.

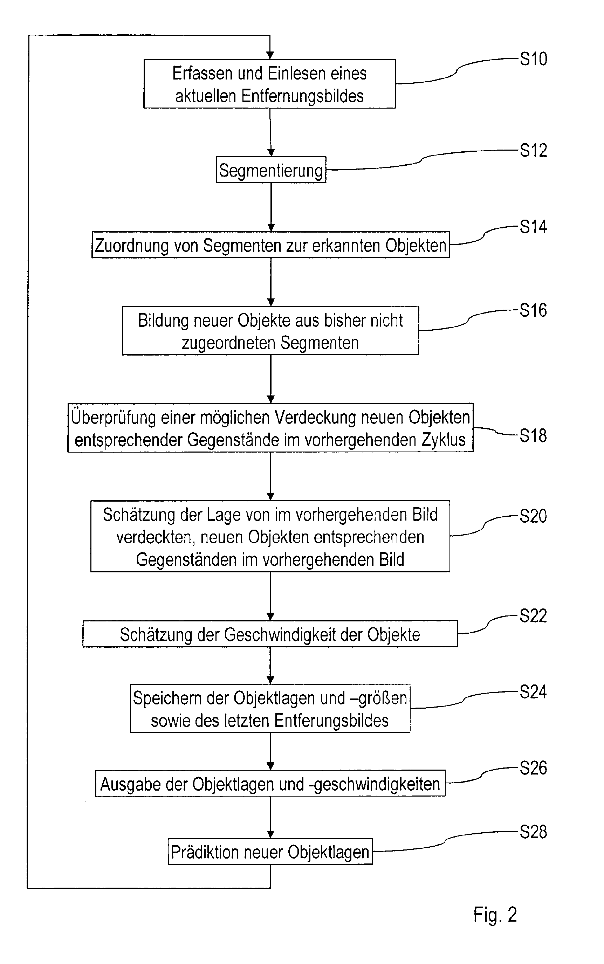

Auf der Basis der von dem Laserscanner 12 erfassten Entfernungsbilder wird das in Fig. 2 veranschaulichte Verfahren nach einer ersten bevorzugten Ausführungsform der Erfindung durchgeführt.

In aufeinanderfolgenden Zyklen werden jeweils die Schritte S10 bis S28 durchgeführt.

Zunächst wird in einem aktuellen Zyklus in Schritt S10 durch eine Abtastung des Erfassungsbereichs 18 ein Entfernungsbild erfasst und in einen Speicher in der Datenverarbeitungseinrichtung 14 eingelesen.

In Schritt S10 wird dabei eine Vorverarbeitung der Entfernungsbilddaten durchgeführt, bei der, gegebenenfalls nach Korrektur der Daten, eine Transformation der Lagekoordinaten der Entfernungsbildpunkte in ein kartesisches, fest mit dem Fahrzeug 10 verbundenes Fahrzeugkoordinatensystem durchgeführt wird.

In Schritt S12 wird dann das Entfernungsbild segmentiert. Dabei werden in an sich bekannter Weise Mengen von Entfernungsbildpunkten gebildet, die sich dadurch auszeichnen, dass jeder Entfernungsbildpunkt einer Menge von wenigstens einem anderen Entfernungsbildpunkt derselben Menge einen mittleren quadratischen Abstand aufweist, der kleiner als ein vorgegebener Segmentierungsabstand ist. Eine so gebildete Menge entspricht jeweils einem Segment. Dabei kann ein Segment auch durch einen einzelnen Entfernungsbildpunkt gebildet sein, der von allen anderen Entfernungsbildpunkten des aktuellen Entfernungsbildes einen mittleren quadratischen Abstand aufweist, der größer ist als der vorgegebene Segmentierungsabstand.

In Schritt S14, der nicht in dem allerersten Zyklus des Verfahrens ausgeführt wird, erfolgt dann eine Zuordnung von Segmenten zu bereits in einem früheren Zyklus des Verfahrens erkannten Objekten, wozu an sich bekannte Methoden verwendet werden können. Im vorliegenden Verfahren wird dazu für jedes in dem vorhergehenden Zyklus bekannte Objekt jeweils eine in Schritt S28 des vorhergehenden Zyklus prädizierte Objektlage verwendet. In dem aktuellen Zyklus wird ein Segment des aktuellen Zyklus einem entsprechenden Objekt des vorhergehenden Zyklus zugeordnet, wenn wenigstens einer der Entfernungsbildpunkte des Segments von dem Objekt in der prädizierten Objektlage einen Abstand aufweist, der kleiner ist als ein von einer Unsicherheit der Prädiktion und der Größe und Orientierung des Objekts im vorhergehenden Zyklus abhängiger Maximalabstand.

In Schritt S16 werden dann aus Segmenten, die keinen aus dem vorhergehenden Zyklus bekannten Objekten zugeordnet werden konnten, neue Objekte gebildet und aus den Lagen der die Segmente konstituierenden Entfernungsbildpunkte eine Lage des Objekts in dem aktuellen Zyklus ermittelt.

Die bisher beschriebenen Schritte S10 bis S16 und die noch zu beschreibenden Schritte S26 und S28 unterscheiden sich nicht von konventionellen Objekterkennungs- und -verfolgungsverfahren.

Im Unterschied zu diesen wird jedoch in Schritt S18 nach einer Prüfung, ob neue Objekte gefunden wurden, überprüft, ob in dem vorhergehenden Zyklus ein einem neu gebildeten Objekt entsprechender Gegenstand in einem vorhergehenden Entfernungsbild bzw. Zyklus gegebenenfalls durch einen einem bereits im vorhergehenden Zyklus erkannten Objekt entsprechenden Gegenstand verdeckt sein konnte.

Die Verarbeitung des aktuellen Entfernungsbildes in den Schritten S10 bis S16 einschließlich der Prüfung in Schritt S18, ob ein neues Objekt gefunden wurde, stellt eine wenigstens vorläufige Auswertung des aktuellen Bildes dar.

Zur Verdeckungserkennung im vorhergehenden Entfernungsbild wird zunächst überprüft, welche in dem vorhergehenden Bild erkannten Objekte in diesem eine durch eine Ausgleichskurve durch die entsprechenden Entfernungsbildpunkte gebildet Kontur aufweisen, die größer ist als die durch die entsprechenden Entfernungsbildpunkte bestimmte Ausdehnung des neuen Objekts in dem aktuellen Zyklus.

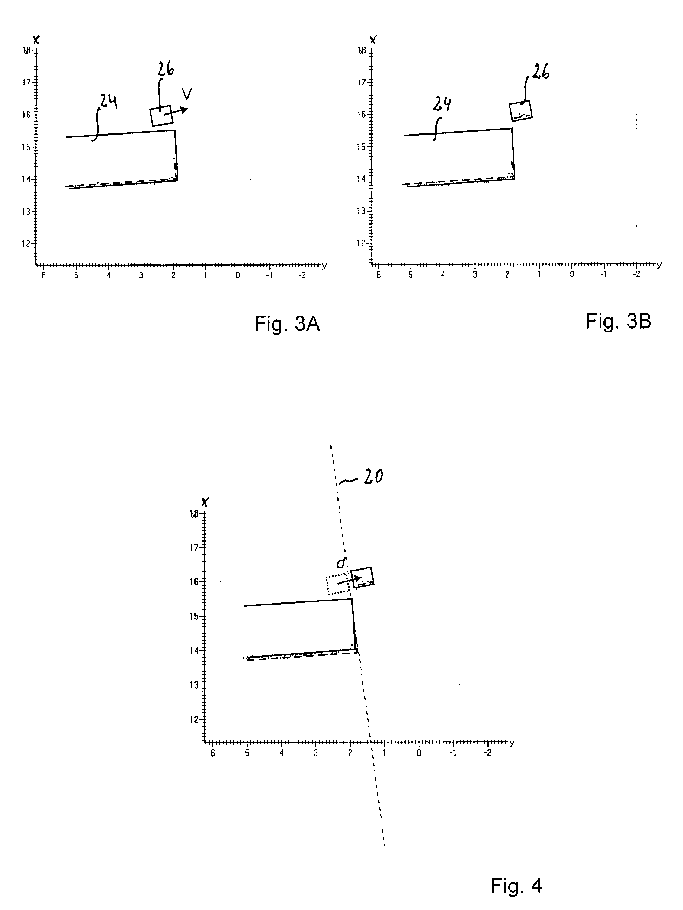

Dies ist beispielhaft in den Fig. 3A und 3B dargestellt, in denen in Ausschnitten aus aufeinanderfolgenden Entfernungsbildern ein Fahrzeug 24, das nur teilweise durch die schwarze durchgezogene Linie dargestellt ist, und ein durch ein Rechteck 26 symbolisierter Fußgänger, der sich mit einer Geschwindigkeit v gegenüber dem Fahrzeug 24 bewegt, gezeigt sind. Die einzelnen Punkte geben Entfernungsbildpunkte der entsprechenden Entfernungsbilder wieder. In den Fig. 3A und 3B befindet sich der Laserscanner 12 im Koordinatenursprung, d.h. in dem Punkt (0,0), wobei die Koordinatenachsen des kartesischen Koordinatensystems in beliebig, aber fest gewählten Entfernungseinheiten eingeteilt sind.

In Fig. 3A, einem vorhergehenden Entfernungsbild, ist der Fußgänger 26 aus Sicht des Laserscanners 12 von dem Fahrzeug 24 verdeckt und daher nicht in dem Entfernungsbild erfassbar. In Fig. 3B, in der das aktuelle Entfernungsbild gezeigt ist, hat sich der Fußgänger 24 hinter dem Fahrzeug 24 weg bewegt und ist nun von dem Laserscanner 12 erstmals erfassbar. Die Konturen der den Gegenständen 24 bzw. 26 entsprechenden Objekte sind in Fig. 3A und 3B jeweils durch eine gestrichelt gezeichnete Ausgleichskurve durch die Entfernungsbildpunkte gegeben. Es ist leicht zu erkennen, dass in Fig. 3B die Kontur des dem Fahrzeug 24 entsprechenden Objekts größer ist als die des dem Fußgänger 26 entsprechenden Objekts.

Die weitere Verdeckungserkennung erfolgt vorzugsweise situationsadaptiv, d.h. in Abhängigkeit von den Geschwindigkeiten der bereits erkannten Objekte in dem vorhergehenden Zyklus. Im Beispiel in den Fig. 3A und 3B ist bekannt, dass das Fahrzeug 24 ruht, und dass, da kein weiteres Objekt in unmittelbarer Nähe des neu erkannten, dem Fußgänger 26 entsprechenden Objekts aufgefunden werden kann bzw. kein anderes Objekt einen kleineren Abstand zu diesem aufweist und das dem Fußgänger 26 entsprechende Objekt aufgrund der Größe keinem sehr schnell bewegten Gegenstand entsprechen kann, der Gegenstand bzw. Fußgänger 26 in dem früheren Bild mit sehr hoher Wahrscheinlichkeit durch das Fahrzeug 24 verdeckt war.

In Schritt S20 wird dann die Lage von im vorhergehenden Entfernungsbild verdeckten, neuen Objekten entsprechenden Gegenständen als Angabe in Bezug auf einen früheren Zustand der jeweiligen neuen Objekte im Sinne der Erfindung geschätzt. Um im Beispiel der Fig. 3A und 3B eine minimale Geschwindigkeit des Gegenstands bzw. Fußgängers 26 schätzen zu können, wird zur Schätzung der Lage in dem vorhergehenden Entfernungsbild in Fig. 3A angenommen, dass der Gegenstand bzw. Fußgänger 26 zur Erfassungszeit des Entfernungsbildes gerade nicht sichtbar war, so dass eine diesen in dem aktuellen Entfernungsbild umgebende Objektbox, deren Größe in dem Verfahren für Objekte des Typs Fußgänger vorgegeben ist, mit ihrer Kante gerade nicht von dem umlaufenden Laserstrahlungsbündel 20 erfasst werden konnte. Auf diese Weise ergibt sich die in Fig. 4 durch das gepunktet gezeichnete Rechteck gegebene geschätzte Lage des Fußgängers 26 in dem vorhergehenden Entfernungsbild bzw. Zyklus, die um den Verschiebungsvektor d gegenüber der Lage in dem aktuellen Entfernungsbild bzw. Zyklus verschoben ist.

In Schritt S22 wird dann die Geschwindigkeit der Objekte geschätzt, indem die Änderung der Lage eines Objekts in dem vorhergehenden Bild und dem aktuellen Bild ermittelt wird, wobei für die neuen Objekte, soweit sie verdeckt waren, die geschätzte Lage verwendet wird. Die geschätzte Geschwindigkeit der Objekte ergibt sich dann sowohl in Bezug auf die Richtung als auch die Größe der Geschwindigkeit durch Division der durch den Verschiebungsvektor d gegebenen Lageänderung durch die Zeitdauer Δt zwischen aufeinanderfolgenden Abtastungen des Erfassungsbereichs 18.

Während für bereits in dem vorhergehenden Zyklus erkannte Objekte ermittelten Geschwindigkeiten aufgrund der vorliegenden Messdaten nur ein geringer Fehler zu erwarten ist, ergibt sich für neue Objekte nur eine mit einem größeren Fehler behaftete Schätzung. Diese Schätzung vermittelt jedoch schneller sehr viel mehr und vor allem sicherheitsrelevante Information als sie ohne Rückgriff auf das frühere Bild möglich wäre.

In Schritt S24 werden dann die ermittelten Objektlagen und -größen und das aktuelle Entfernungsbild, das im folgenden Zyklus als dann vorhergehendes Entfernungsbild zur Verfügung stehen muss, gespeichert, wobei das vorhergehende Entfernungsbild gelöscht wird.

In Schritt S26 werden die Objektlagen und Geschwindigkeiten an entsprechende weiterverarbeitende Einrichtungen ausgegeben.

In Schritt S28 wird zum Ende des aktuellen Zyklus eine Prädiktion neuer Objektlagen für den folgenden Zyklus durchgeführt. Die Prädiktion der Lage des Objekts wie auch die Ermittlung der Unsicherheit der Prädiktion kann dabei beispielsweise in bekannter Weise mittels eines Kalman-Filters erfolgen.

Dadurch, dass dem neuen Objekt bzw. Gegenstand in dem aktuellen Zyklus bereits eine Geschwindigkeit zugeordnet werden kann, kann die Initialisierung des Kalman-Filters für dieses Objekt mit wesentlich genaueren Daten erfolgen, was die folgende Objekterkennung und -verfolgung wesentlich erleichtert.

Danach kann der nächste Zyklus mit Schritt S10 beginnen.

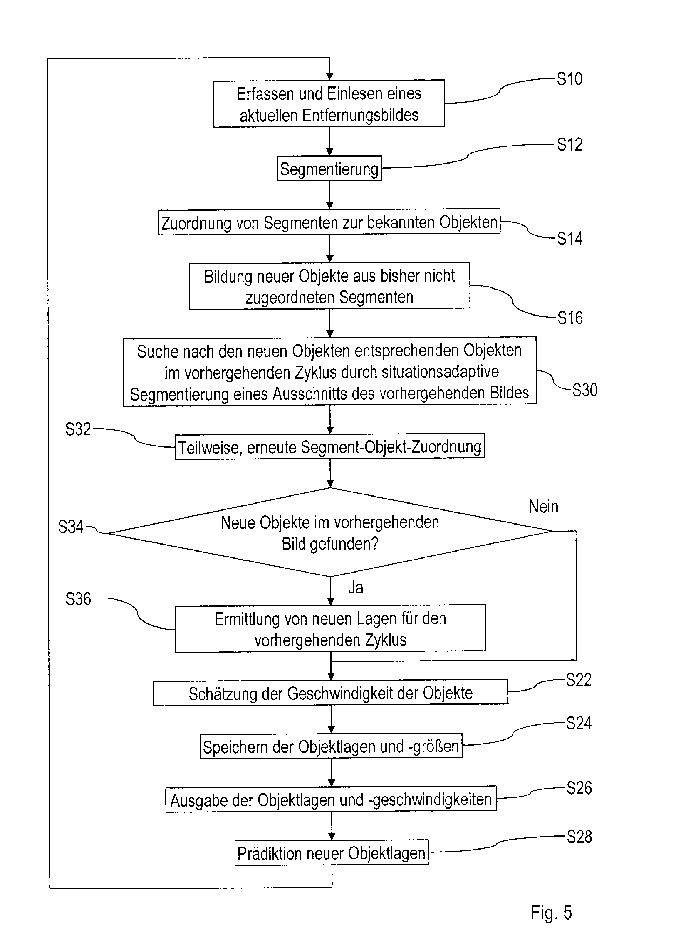

Ein Verfahren zur Erkennung und Verfolgung von Objekten nach einer zweiten bevorzugten Ausführungsform der Erfindung ist schematisch in dem Ablaufdiagramm in Fig. 5 dargestellt. Es unterscheidet sich von dem Verfahren nach dem ersten Ausführungsbeispiel dadurch, dass in einem aktuellen Zyklus neu erkannte Objekte anders behandelt werden, so dass die Schritte S10 bis S16 und S22 bis S28 die gleichen sind wie in dem zuvor geschilderten Ausführungsbeispiel und die Ausführungen dort entsprechend auch hier gelten. Dementsprechend ist die Vorrichtung zur Verfolgung und Erkennung von Objekten mit dem Verfahren nach der zweiten bevorzugten Ausführungsform der Erfindung gegenüber der entsprechenden Vorrichtung im ersten Ausführungsbeispiel nur dahingehend geändert, dass das in der Datenverarbeitungseinrichtung 14 abgearbeitete Programm entsprechend modifiziert ist, d.h. insbesondere, dass die Mittel zur Zuordnung von Teilen eines früheren Bildes und/oder zur Ermittlung wenigstens einer Angabe in Bezug auf einen früheren Zustand des Objekts oder eines diesem entsprechenden Gegenstands auf der Basis eines entsprechenden früheren Bildes und Zuordnung der Angabe zu dem Teil des aktuellen Bildes oder dem aktuellen Objekt, modifiziert sind.

Bei dem Verfahren wird nach den wie in dem ersten Ausführungsbeispiel ablaufenden Schritten S10 bis S16 nach der Bildung neuer Objekte aus bisher nicht zugeordneten Segmenten in Schritt S16 in Schritt S30 nach Überprüfung des Kriteriums, ob überhaupt in dem aktuellen ein neues Objekt gefunden wurde, nach den neuen Objekten entsprechenden Objekten bzw. Gegenständen im vorhergehenden Entfernungsbild gesucht. Dabei wird angenommen, dass das neue Objekt in dem vorhergehenden Zyklus bzw. Entfernungsbild nicht aufgefunden werden konnte, da es bedingt durch die Segmentierung und Objektbildung bzw. Segment-Objekt-Zuordnung nicht als eigenständiges Objekt erkannt werden konnte.

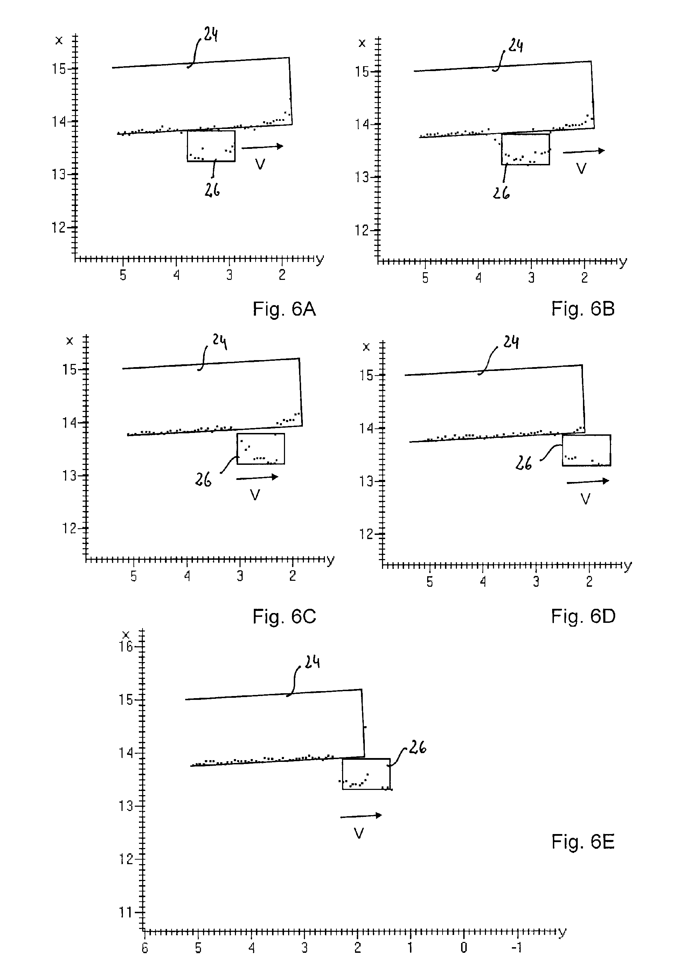

Ein Beispiel hierzu ist in den Fig. 6A bis 6G veranschaulicht, in denen jeweils Ausschnitte aus aufeinanderfolgenden Entfernungsbildern gezeigt sind. Der Laserscanner 12 ist in den Entfernungsbildern wiederum im Ursprung (0,0) des Koordinatensystems angeordnet, das dem kartesischen Koordinatensystem des vorhergehenden Ausführungsbeispiels entspricht.

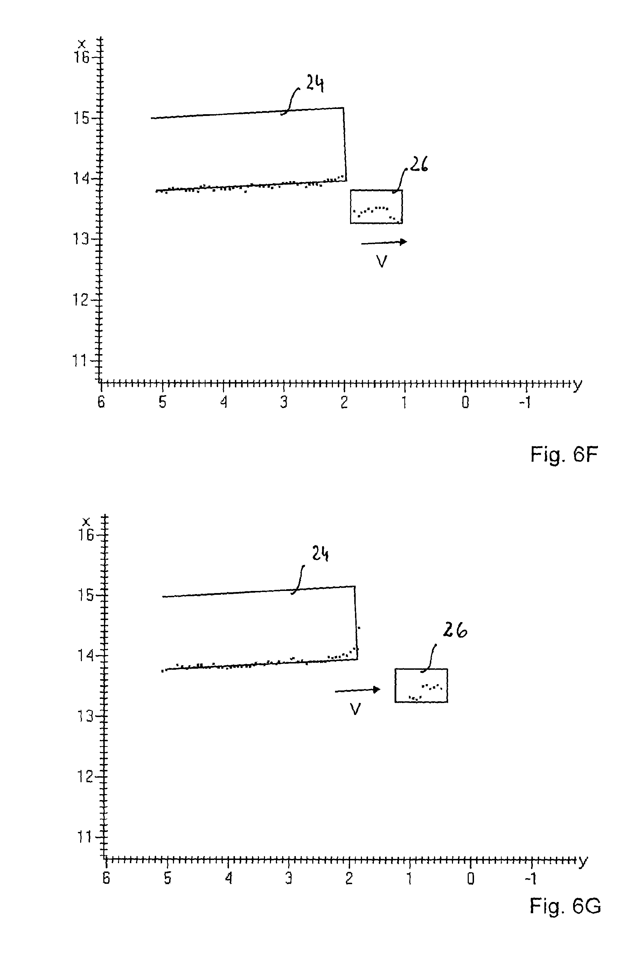

In den Entfernungsbildern bewegt sich ein Fußgänger 26 aus der Sicht des Laserscanners 12 zunächst unmittelbar vor einem parkenden Fahrzeug 24 mit einer Geschwindigkeit v, um sich in den Fig. 6F und 6G schließlich soweit von dem Fahrzeug 24 zu entfernen, dass er als eigenständiges Objekt mit dem normalen Segmentierungsverfahren erkannt werden kann. In den vorhergehenden Entfernungsbildern jedoch kann die Segmentierung die dem Fahrzeug 24 entsprechenden Entfernungsbildpunkte nicht von den dem Fußgänger 26 entsprechenden Entfernungsbildpunkten trennen.

Ausgehend von der Größe des Gegenstands 26 bzw. des entsprechenden neuen Objekts in dem aktuellen Zyklus, in dem im Beispiel das Entfernungsbild in Fig. 6F ausgewertet wird, wird angenommen, dass dieser nur eine geringe Geschwindigkeit aufweisen kann, da das Objekt ein Fußgänger sein muss. Zur Suche in Schritt S30 werden daher für die situationsadaptive Neusegmentierung die Objekte ermittelt, die dem dem Fußgänger 26 entsprechenden neuen Objekt in dem aktuellen, dem Entfernungsbild in Fig. 6F entsprechenden Zyklus am nächsten liegen. Im Beispiel ist dies nur das dem Fahrzeug 24 entsprechende Objekt. Die Schritte bis zu diesem Stadium entsprechen einer wenigstens vorläufigen Auswertung des aktuellen Entfernungsbildes im Sinne der Erfindung.

Es wird dann ein Teil des vorhergehenden Entfernungsbildes neu segmentiert. Genauer werden die Entfernungsbildpunkte der Segmente in dem vorhergehenden Entfernungsbild bzw. Zyklus neu segmentiert, die die jeweiligen zuvor zur Neusegmentierung ermittelten Objekte in dem vorhergehenden Zyklen bilden. Im Beispiel sind dies alle Entfernungsbildpunkte des Ausschnitts des Entfernungsbildes in Fig. 6E.

Dazu wird im vorliegenden Ausführungsbeispiel das in Schritt S12 angewendete Segmentierungsverfahren, allerdings mit einem reduzierten Segmentierungsabstand, verwendet. Der Segmentierungsabstand kann dabei fest vorgegeben werden. Vorzugsweise wird der Segmentierungsabstand aber in Abhängigkeit von der erfassten Größe wenigstens eines der erfassten Objekte, vorzugsweise des kleinsten, gewählt, so dass eine situativ angepasste Segmentierung erfolgen kann.

Ergibt sich eine Änderung in der Anzahl der Segmente, wird in Schritt S32 eine neue Zuordnung von Segmenten zu den von der erneuten Segmentierung betroffenen Objekten vorgenommen. Dabei wird für in dem vorhergehenden Zyklus bereits bekannte Objekte deren Lage und Geschwindigkeit in dem vorhergehenden Zyklus in Verbindung mit der in dem aktuellen Zyklus ermittelten Orientierung, Form und Größe sowie für das neue Objekt dessen in dem aktuellen Zyklus ermittelte Form und Größe verwendet.

In Schritt S34 wird dann überprüft, ob im vorhergehenden Entfernungsbild neue bzw. geänderte Objekte gefunden wurden. Ist dies nicht der Fall wird das Verfahren mit Schritt S22 fortgesetzt.

Andernfalls werden in Schritt S36 eine Lage des dem neuen Objekt entsprechenden Gegenstands und des veränderten Objekts in dem vorhergehenden Entfernungsbild ermittelt. Das neue Objekt wird dann als bekanntes Objekt behandelt, dessen Lage im vorhergehenden Zyklus bekannt ist, wozu entsprechende Änderungen in Datenstrukturen des Programms durchgeführt werden und ein entsprechender Kalman-Filter für den vorhergehenden Zyklus nachträglich initialisiert wird. Weiterhin kann für das veränderte Objekt eine erneute Prädiktion der Lage für den aktuellen Zyklus erfolgen, um die Genauigkeit des Kalman-Filters zu verbessern.

Es werden daher in dem aktuellen Zyklus Objektlagen für den vorhergehenden und den aktuellen Zyklus für im vorhergehenden Zyklus bekannte und in Schritt S32 neu aufgefundene Objekte erhalten, so dass im Schritt S22 nun eine Schätzung der Geschwindigkeit dieser Objekte erfolgen kann, wobei die Objektlagen in dem vorhergehenden Entfernungsbild bzw. Zyklus verwendet werden können.

Die weiteren Schritte S24 bis S28 verlaufen wie in dem ersten Ausführungsbeispiel.

Dadurch, dass dem Gegenstand bzw. Fußgänger 26 in dem aktuellen Zyklus bereits eine Geschwindigkeit zugeordnet werden kann, kann die Initialisierung des Kalman-Filters im aktuellen Zyklus im Ergebnis bereits auf der Basis von Daten für dieses Objekt aus dem vorhergehenden Zyklus und damit insgesamt mit wesentlich genaueren Daten erfolgen, was die folgende Objekterkennung und -verfolgung wesentlich erleichtert.

Auf diese Weise ist es möglich beispielsweise einem sich direkt vor einem parkendem Fahrzeug bewegende Fußgänger, der dann auf die Fahrbahn tritt, nach der Verarbeitung nur eines Entfernungsbildes, in dem er als einzelnes Objekt erkannt wurde, eine Trajektorie und damit auch Geschwindigkeit zuzuordnen.

Grundsätzlich können die Verfahren der ersten beiden Ausführungsbeispiele kombiniert werden. Beispielsweise kann erst eine Prüfung gemäß Schritt S30 erfolgen und, falls in Schritt S34 keine neuen Objekte gefunden wurden, eine Verdeckungserkennung nach dem ersten Ausführungsbeispiel.

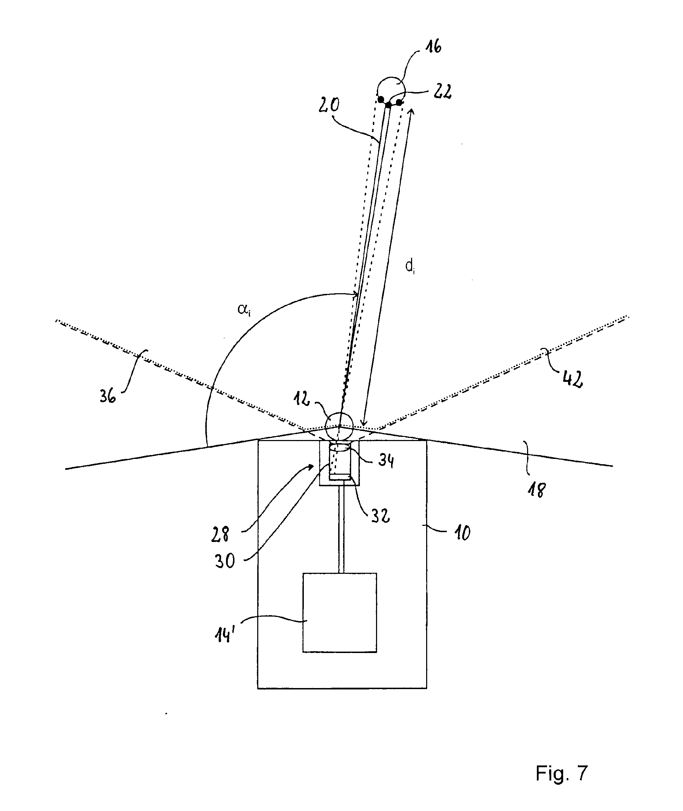

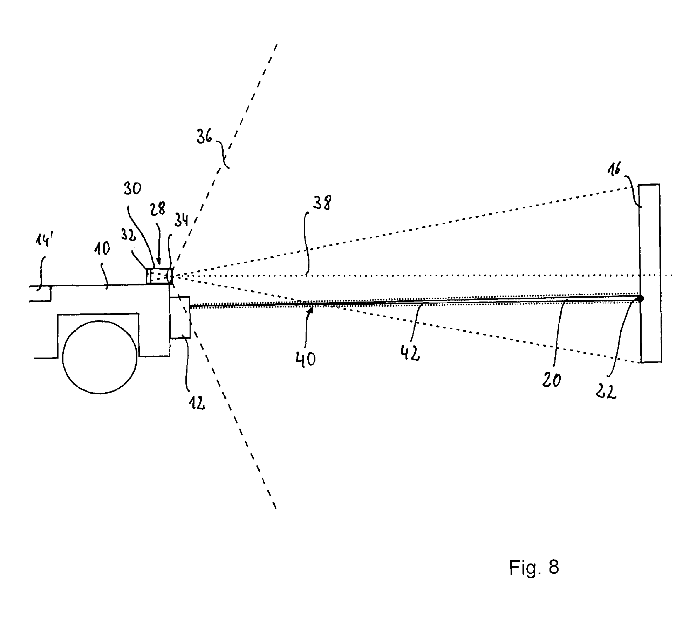

In den Fig. 7 und 8 ist in einer der Situation in Fig. 1 entsprechenden Situation ein Fahrzeug 10 gezeigt, das eine Vorrichtung zur Erkennung und Verfolgung von Objekten nach einer dritten bevorzugten Ausführungsform der Erfindung trägt.

Die Vorrichtung zur Erkennung und Verfolgung von Objekten unterscheidet sich von der Vorrichtung zur Erkennung und Verfolgung von Objekten im ersten Ausführungsbeispiel dadurch, dass zusätzlich zu dem Laserscanner 12 ein Videosystem 30 vorgesehen ist, das, wie der Laserscanner 12 auch, über eine entsprechende Datenverbindung mit einer gegenüber der Datenverarbeitungseinrichtung 14 im ersten Ausführungsbeispiel modifizierten Datenverarbeitungsvorrichtung 14' verbunden ist. Für die anderen, gleiche Teile bzw. Merkmale werden jeweils die gleichen Bezugszeichen verwendet und die Erläuterungen zum ersten Ausführungsbeispiel gelten entsprechend.

Das Videosystem 28 verfügt über eine monokulare Videokamera 30, bei der es sich um eine konventionelle Schwarz-Weiß-Videokamera mit einem CCD-Flächensensor 32 und einer abbildenden Vorrichtung, die in den Fig. 7 und 8 schematisch als einfache Linse 34 dargestellt ist, tatsächlich aber aus einem Linsensystem besteht, und aus einem Erfassungsbereich 36 des Videosystems einfallendes Licht auf den CCD-Flächensensor 32 abbildet. Eine optische Achse 38 der Videokamera 30 ist in einem geringen, in Fig. 8 übertrieben groß gezeigten Winkel auf die durch die Schwenkebene des Laserstrahlungsbündels 20 gegebene Abtastebene 40 des Laserscanners 12 zu geneigt.

Der CCD-Flächensensor 32 weist in einer Matrix angeordnete Photodetektionselemente auf, die zur Bildung von Videobildern mit Videobildpunkten zyklisch ausgelesen werden. Die Videobilder enthalten für jeden Bildpunkt zunächst jeweils die Position der Photodetektionselemente in der Matrix oder eine andere Kennung für die Photodetektionselemente und jeweils einen der Intensität des von dem entsprechenden Photodetektionselement empfangenen Lichts entsprechenden Intensitätswert. Die Videobilder werden in diesem Ausführungsbeispiel im Wesentlichen synchron mit den Entfernungsbildern und damit mit der gleichen Rate erfasst, mit der auch von dem Laserscanner 12 Entfernungsbilder erfasst werden.

Von einem Gegenstand, in den Fig. 7 und 8 der Person 16, ausgehendes Licht wird durch die Linse 34 auf den CCD-Flächensensor 32 abgebildet. Dies ist in den Fig. 7 und 8 für die Umrisse des Gegenstands bzw. der nur schematisch gezeigten Person 16 durch die kurzgestrichelten Linien schematisch angedeutet.

Aus dem Abstand von CCD-Flächensensor 32 und Linse 34 sowie aus der Lage und den Abbildungseigenschaften der Linse 34, beispielsweise deren Brennweite, kann aus der Lage eines Gegenstandspunktes, z.B. des Gegenstandspunktes 22 auf der Person 16, berechnet werden, auf welchem Ort des CCD-Flächensensors 32 bzw. welches der als Matrix angeordneten Photodetektionselemente der Gegenstandspunkt abgebildet wird. Umgekehrt kann aus der Lage eines Photodetektionselements ein durch die kurzgestrichelten Linien in Fig. 7 und Fig. 8 angedeuteter Lichtkegel ermittelt werden, in dem Gegenstandspunkte bzw. -bereiche liegen müssen, von denen aus erfasste Strahlung auf das Photodetektionselement fallen kann. Hierzu kann ein entsprechendes Kameramodell verwendet werden. Im Beispiel handelt es sich um ein an sich bekanntes Lochkamera-Modell.

Ein gemeinsamer Erfassungsbereich 42 ist in den Fig. 7 und 8 schematisch durch eine gepunktete Linie näherungsweise dargestellt und durch den Schnitt des Erfassungsbereichs 18 des Laserscanners 12 und des Erfassungsbereichs 36 des Videosystems 28 gegeben.

Die Datenverarbeitungseinrichtung 14' unterscheidet sich von der Datenverarbeitungseinrichtung 14 zum einen dadurch, dass Schnittstellen vorgesehen sind, um im Wesentlichen synchron, d.h. innerhalb eines Zeitraums, der deutlich kleiner ist als der Zeitraum Δt zwischen aufeinanderfolgenden Abtastungen des Erfassungsbereichs 18 des Laserscanners 12, jeweils ein aktuelles Entfernungsbild und ein aktuelles Videobild des Videosystems 28 einzulesen. Zum anderen ist der Prozessor mit einem Computerprogramm nach einer dritten bevorzugten Ausführungsform der Erfindung zur Durchführung eines Verfahrens nach einer dritten bevorzugten Ausführungsform der Erfindung programmiert. Die Datenverarbeitungseinrichtung 14' umfasst daher Mittel zur Auswertung aktueller Bilder des Sensors, Mittel zur Ermittlung von Teilen eines aktuellen Bildes als Ergebnis einer wenigstens vorläufigen Auswertung des aktuellen Bildes oder zur Erkennung eines Objekts in dem aktuellen Zyklus und Mittel zur Zuordnung von Teilen eines früheren Bildes und/oder zur Ermittlung wenigstens einer Angabe in Bezug auf einen früheren Zustand des Objekts oder eines diesem entsprechenden Gegenstands auf der Basis eines entsprechenden früheren Bildes und Zuordnung der Angabe zu dem Teil des aktuellen Bildes oder dem aktuellen Objekt im Sinne der Erfindung.

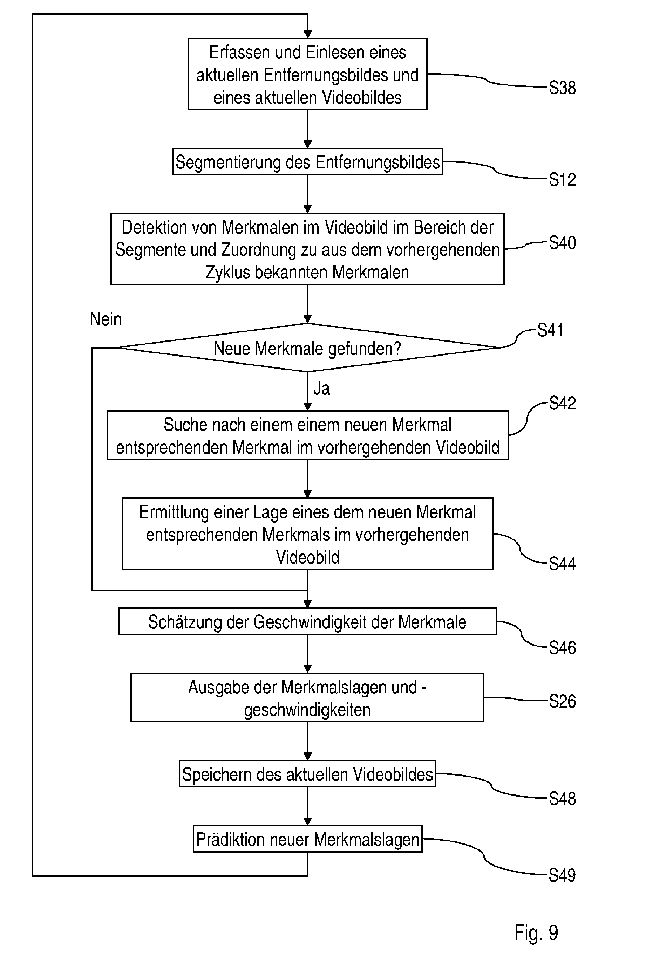

Auf der Basis von von dem Laserscanner 12 und dem Videosystem 28 im Wesentlichen synchron erfassten Entfernungsbildern bzw. Videobildern wird das in Fig. 9 veranschaulichte Verfahren nach der dritten bevorzugten Ausführungsform der Erfindung durchgeführt. Bei dem Verfahren dieses Ausführungsbeispiels werden Merkmale in den Videobildern erkannt und verfolgt, wobei jedoch die Videobildverarbeitung aus Rechenzeitgründen auf der Basis der Entfernungsbilder erfolgt, indem nach Merkmalen nur in solchen Abschnitten des Videobildes gesucht wird, in denen Entfernungsbildpunkte des Entfernungsbildes und damit entsprechende Gegenstandsbereiche liegen.

Zunächst werden in Schritt S38 ein aktuelles Entfernungsbild und ein aktuelles Videobild eingelesen und vorverarbeitet. Das Einlesen und die Vorverarbeitung der Bilder kann dabei unabhängig voneinander für die beiden Bilder parallel oder auch in beliebiger Reihenfolge durchgeführt werden.

Den Entfernungsbildpunkten in dem Entfernungsbild wird noch zusätzlich zu den Lagekoordinaten in der Abtastebene 40 eine durch die Abtastebene 40, in der die den Entfernungsbildpunkten entsprechenden Gegenstandspunkte liegen, bestimmte Lagekomponente zur Bildung eines vollständigen Lagekoordinatensatzes in drei Dimensionen hinzugefügt. Mit der Lage eines Entfernungsbildpunktes wird im Folgenden die durch diese Koordinaten definierte Position bezeichnet.

Weiterhin werden, nach eventuellen Korrekturen des Videobildes, die Daten des Videobildes in das Fahrzeugkoordinatensystem transformiert, in dem auch die Entfernungsbildpunkte definiert sind. Dazu wird eine Rektifikation der Videobilddaten, beispielsweise zur Beseitigung von Verzerrungen, und eine Transformation der Videobildpunkte auf eine Bildebene durchgeführt. Mittels des Kameramodells für die Videokamera 30 können den Videobildpunkten dann Lagen in dem Fahrzeugkoordinatensystem in einer entsprechenden Ebene zugeordnet werden.

Das aktuelle Entfernungsbild und das aktuelle Videobild werden zur weiteren Verwendung abgespeichert.

In Schritt S12 wird dann, wie in dem ersten Ausführungsbeispiel, das Entfernungsbild segmentiert.

In dem folgenden Schritt S40 werden Merkmale im Videobild detektiert, wobei von dem Videobild nur Bereiche verwendet werden, in denen dem Entfernungsbild zufolge ein einem Segment in dem Entfernungsbild entsprechender Gegenstand erfassbar sein muss. Genauer erfolgt die Detektion nur in im Wesentlichen senkrecht zu der Abtastebene des Laserscanners 12 verlaufenden, jeweils einem Segment des Entfernungsbildes entsprechenden Streifen des Videobildes, die den Entfernungsbildpunkten in den Segmenten entsprechenden Videobildpunkte aufweisen. Die Streifen sind dabei so definiert, dass sie sich in einer Richtung orthogonal zu der Abtastebene 40 des Laserscanners 12 über die gesamte Ausdehnung des Videobildes erstrecken und in der dazu orthogonalen Richtung ein Breite aufweisen, die so bestimmt ist, dass für alle Entfernungsbildpunkte jeweils eines Segments entsprechende Videobildpunkte in dem jeweiligen Streifen liegen. Diese Videobildpunkte können durch Verwendung des Kameramodells bestimmt werden. Weiterhin weisen die Streifen in der Breite jeweils vorgegebene Randbereiche zu beiden Seiten der jeweils äußersten Videobildpunkte auf. Da andere Teile des Videobildes zunächst ignoriert werden, erfolgt insofern eine Aufmerksamkeitssteuerung der Videobildverarbeitung.

In diesem Schritt erfolgt weiterhin eine Zuordnung in dem aktuellen Videobild aufgefundener Merkmale zu aus dem vorhergehenden Zyklus bekannten Merkmalen unter Verwendung einer in Schritt S49 des vorhergehenden Zyklus jeweils für den aktuellen Zyklus prädizierten Lage der jeweiligen Merkmale. Dabei werden gleichzeitig Lagen der Merkmale in dem aktuellen Zyklus ermittelt.

In Schritt S41 wird dann überprüft, ob neue Merkmale aufgefunden wurden, die nicht aus dem vorhergehenden Zyklus bekannten Merkmalen zugeordnet werden konnten.

Werden dabei neue Merkmale gefunden, wird in Schritt S42 nach den neuen Merkmalen entsprechenden Merkmalen in dem vorhergehenden Videobild durch eine Rückwärtsverfolgung gesucht. Hierzu können bekannte Verfahren der Videobildverarbeitung verwendet werden.

In Schritt S44 wird dann die Lage eines dem neuen Merkmal entsprechenden Merkmals in dem vorhergehenden Videobild ermittelt.

Auf der Basis der Lagen der Merkmale in dem vorhergehenden Videobild und der Lagen der Merkmale in dem aktuellen Videobild werden dann in Schritt S46 Geschwindigkeiten der Merkmale geschätzt.

Die ermittelten Merkmalslagen und -geschwindigkeiten werden daraufhin in Schritt S26 nach Speicherung zur weiteren Verwendung ausgegeben.

In Schritt S48 wird dann das aktuelle Videobild gespeichert, nachdem das vorhergehende Videobild gelöscht wurde.

In Schritt S49 werden nun neue Merkmalslagen prädiziert, so dass eine Zuordnung von Merkmalen in Schritt S40 in dem folgenden Zyklus zu Gegenständen erleichtert wird. Hierzu können beispielsweise die nun bekannten Geschwindigkeiten oder auch ein Kalman-Filter verwendet werden.

Ausgehend von der wenigstens vorläufigen Auswertung des Entfernungs- und Videobildes in den Schritten S38, S12 und S40 erfolgt also eine nachträgliche bzw. ergänzende Auswertung eines vorhergehenden Videobildes. Die Ergebnisse dieser Auswertung, das aufgefundene Merkmal bzw. dessen Lage in dem vorhergehenden Videobild, werden dann im aktuellen Zyklus zur Ermittlung der Geschwindigkeit des aktuellen Merkmals verwendet.

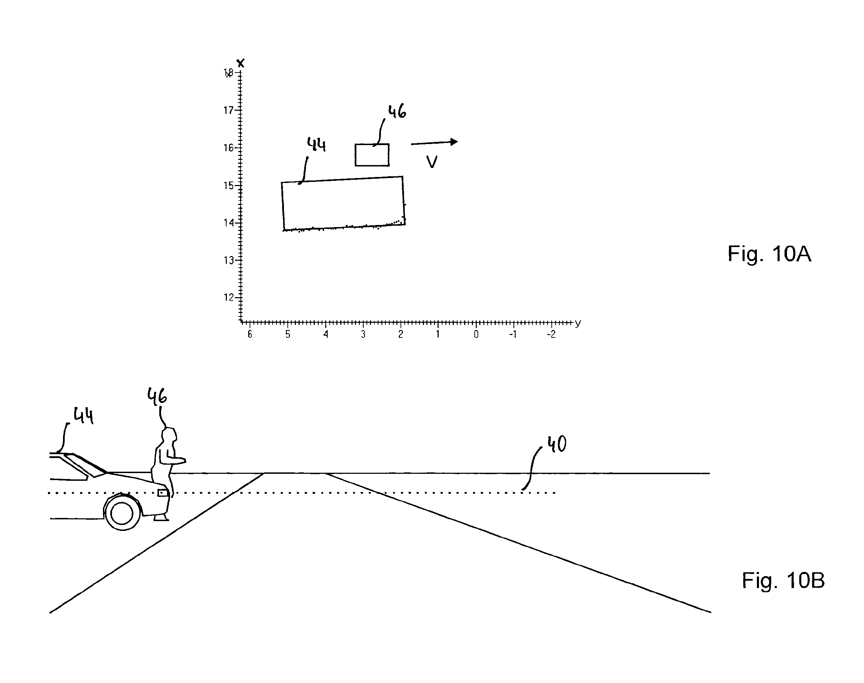

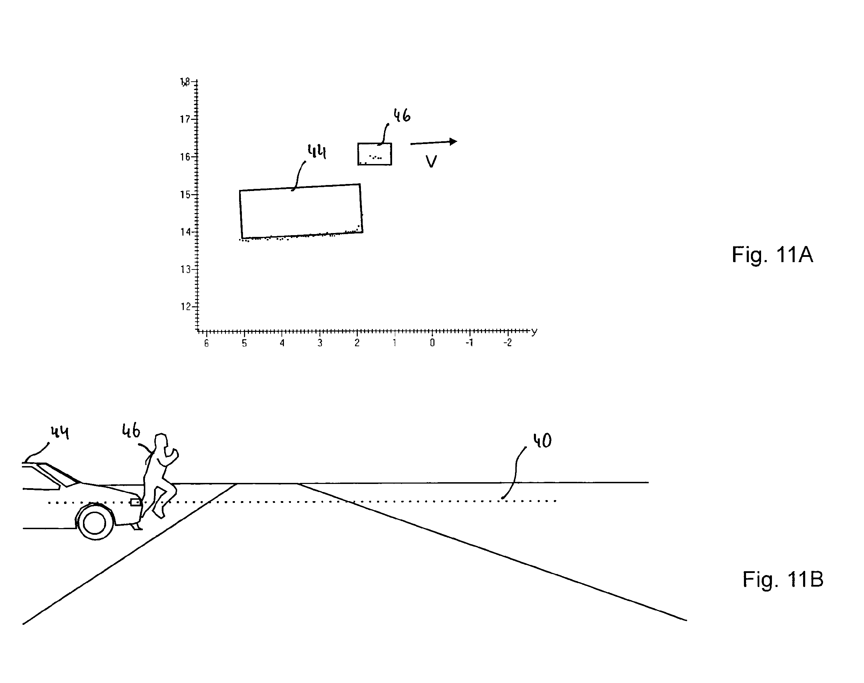

Die Verwendung des Verfahrens zur Erkennung von plötzlich hinter parkenden Fahrzeugen hervortretenden Fußgängern ist in den Fig. 10A und 10B bzw. 11A und 11B gezeigt. Die Fig. 10A und 11A zeigen dabei jeweils einen Ausschnitt aus aufeinanderfolgenden, von dem Laserscanner 12 erfassten Entfernungsbild auf Höhe der Abtastebene 40, während die Fig. 10B und 11B Ausschnitte aus entsprechend im Wesentlichen synchron mit dem Videosystem 28 erfassten Videobildern zeigen. In diesen Figuren ist die Abtastebene 40 des Laserscanners 12 durch eine gepunktete Linie dargestellt. Weiterhin entspricht das in den Fig. 10A und 10B verwendete kartesische Koordinatensystem dem in den vorhergehenden Ausführungsbeispielen.

In den Fig. 10A und 11A sind das Fahrzeug durch ein Rechteck 44 und der Fußgänger durch ein Rechteck 46 schematisch dargestellt.

Zunächst ist der Fußgänger, wie in den Fig. 10A und 10B gezeigt, von dem Laserscanner 12 nicht erfassbar, da er durch das Fahrzeug 44 verdeckt ist. Da der Erfassungsbereich 36 des Videosystems 28 jedoch in senkrechter Richtung zu der Abtastebene 40 einen größeren Öffnungswinkel aufweist als der Erfassungsbereich 18 des Laserscanners 12, ist in dem entsprechenden Videobild der Fußgänger 46 bereits zu sehen. Bedingt durch die Aufmerksamkeitssteuerung wird dieser jedoch nicht in dem Videobild detektiert, da er in dem Entfernungsbild (vgl. Fig. 10A) verdeckt ist.

Da sich der Fußgänger 46 im Beispiel mit einer Geschwindigkeit v nach rechts bewegt, ist er nach einiger Zeit nicht mehr durch das Fahrzeug 44 verdeckt, was in den Fig. 11A und 11B gezeigt ist. Nun kann der Fußgänger 46 in dem Entfernungsbild erfasst werden, so dass er in dem Videobild auch über die Aufmerksamkeitssteuerung detektiert wird. Während bei einer konventionellen Videobildverarbeitung nun außer der Lage des Fußgängers 46 nichts über diesen bekannt wäre, wird bei dem Verfahren des Ausführungsbeispiels der Fußgänger 46 in den Videobildern zeitlich zurückverfolgt, wobei er in dem in Fig. 10B gezeigten Videobilder wiedererkannt werden kann. Die dadurch festgestellte Lage in dem früheren Videobild erlaubt es nun, die Geschwindigkeit des zunächst nur in dem aktuellen Videobild erkannten Fußgängers 46 schon bei dessen erster Erfassung bzw. Erkennung zu ermitteln. Da die Rückverfolgung nur bei Auffinden neuer Merkmale auftritt, wird die Ausführungsgeschwindigkeit des Verfahrens im Mittel nur wenig herabgesetzt.

Bei einem Verfahren zur Erkennung und Verfolgung von Objekten nach einer vierten bevorzugten Ausführungsform der Erfindung wird im Wesentlichen die gleiche Vorrichtung zur Erkennung und Verfolgung von Objekten wie in dem dritten Ausführungsbeispiel verwendet, wobei jedoch die Programmierung der Datenverarbeitungseinrichtung 14' entsprechend dem veränderten Verfahren ebenfalls verändert ist. Das heißt auch, dass die Mittel zur Zuordnung von Teilen eines früheren Bildes und/oder zur Ermittlung wenigstens einer Angabe in Bezug auf einen früheren Zustand des Objekts oder eines diesem entsprechenden Gegenstands auf der Basis eines entsprechenden früheren Bildes und Zuordnung der Angabe zu dem Teil des aktuellen Bildes oder dem aktuellen Objekt, modifiziert sind.

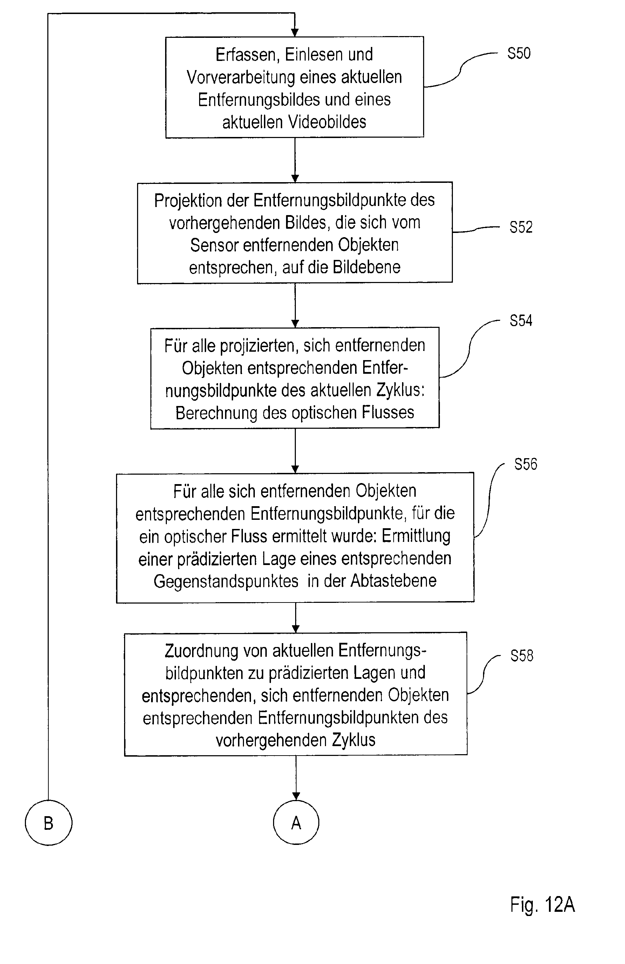

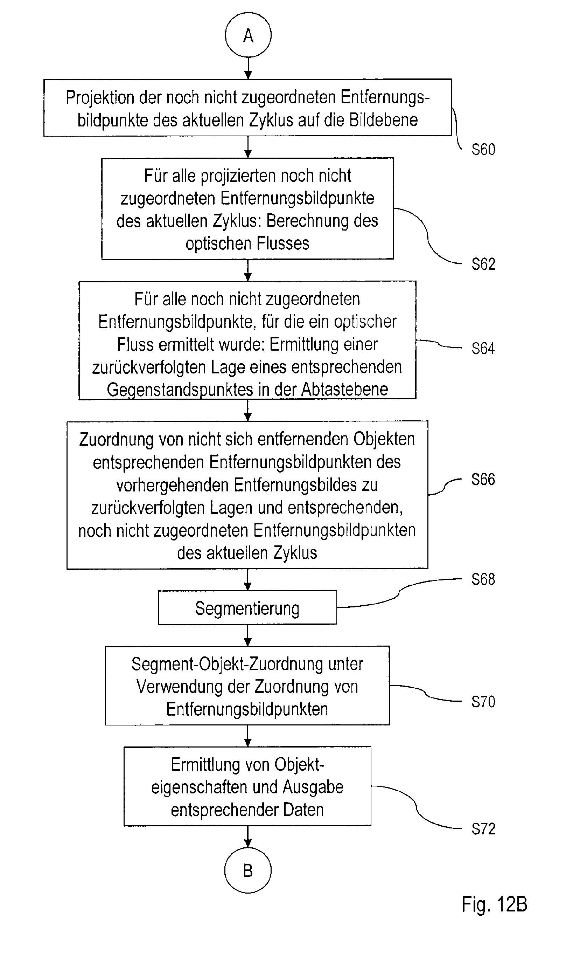

Bei diesem in Fig. 12A und B schematisch veranschaulichten Verfahren werden Entfernungsbildpunkte in aufeinanderfolgend erfassten Entfernungsbildern unter Verwendung des optischen Flusses in entsprechenden Bereichen in im Wesentlichen synchron mit den Entfernungsbildern erfassten Videobildern verfolgt.

Dabei wird eine Zuordnung von Objekten und diese darstellenden Entfernungsbildpunkten zueinander verwendet, so dass eine Verfolgung der Objekte durch Verfolgung der entsprechenden, dem Objekt zugehörigen Entfernungsbildpunkte erfolgen kann. In Bezug auf Details einiger Schritte des vorliegenden Verfahrens und in Bezug auf möglich Varianten wird auf das erste Ausführungsbeispiel bzw. die anderen Ausführungsbeispiele in der deutschen Patentanmeldung mit der Anmelderin der vorliegenden Anmeldung mit dem amtlichen Aktenzeichen DE 103 12 249 verwiesen.

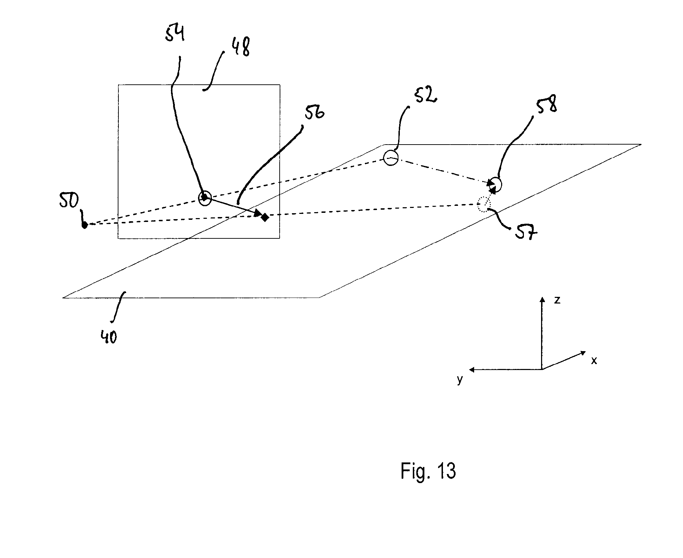

In Schritt S50 eines aktuellen Zyklus werden zunächst ein aktuelles Entfernungsbild und ein aktuelles Videobild erfasst und in die Datenverarbeitungseinrichtung eingelesen, in der eine Vorverarbeitung dieser Bilder entsprechend dem Schritt S38 in dem vorhergehenden Ausführungsbeispiel erfolgt. Die Transformation der Videobildpunkte ist jedoch zur einfacheren Berechnung des optischen Flusses gegenüber dem Schritt S38 in dem vorhergehenden Ausführungsbeispiel dahingehend modifiziert, dass die Transformation der Videobildpunkte auf eine zur Definition bzw. Berechnung eines optischen Flusses verwendete Bildebene 48 (vgl. Fig. 13) durchgeführt wird. Für eine in den Schritten S52 und S60 durchzuführende Projektion von Entfernungsbildpunkten in die Bildebene wird der Einfachheit halber ein dem Fachmann grundsätzlich bekanntes modifiziertes Lochkamera- bzw. Mattscheiben-Modell für die Videokamera 30 verwendet, das durch die Lage eines optischen Zentrums 50 und der Bildebene 48 definiert ist, die als Fläche zur Definition bzw. Ermittlung des optischen Flusses dient. Die Lage des optischen Zentrums 50 wird unter Verwendung der Abbildungsgeometrie der Videokamera 30, insbesondere der Lage relativ zu dem Laserscanner 12 und der Brennweite der Linse 34, ermittelt. Das Lochkamera-Modell ist zur vereinfachten Darstellung dahingehend modifiziert, dass die Bildebene 48 an einer relativ zu dem Videosystem 28 an dem Fahrzeug 10 festen Position zwischen dem optischen Zentrum 50 und den Gegenstandspunkten, in Fig. 13 den Punkten 52 und 58, liegt und durch Punktspiegelung der eigentlichen Bildebene an dem optischen Zentrum 50 aus dieser hervorgeht.

In Schritt S52, der im ersten Zyklus des Verfahren entfällt, werden zunächst alle Entfernungsbildpunkte des dem aktuellen Zyklus unmittelbar vorhergehenden Zyklus ermittelt, die sich von dem Sensor bzw. Laserscanner 12 entfernenden Objekten entsprechen. Der Einfachheit halber werden diese Entfernungsbildpunkte als sich entfernenden Objekten entsprechende Entfernungsbildpunkte bezeichnet. Unter Verwendung des Kameramodells werden dann für diese sich entfernenden Objekten entsprechende Entfernungsbildpunkte aus dem dem aktuellen Zyklus unmittelbar vorhergehenden Zyklus entsprechende Lagen bzw. Koordinaten entsprechender Videobildpunkte in der Bildebene 48 berechnet und zur Verwendung im aktuellen Zyklus gespeichert. Wie in Fig. 13 geometrisch veranschaulicht, ergibt sich die Lage jeweils durch den Schnittpunkt 54 einer durch den Entfernungsbildpunkt, in Figur dem Entfernungsbildpunkt 52, und das optische Zentrum 50 verlaufenden Graden mit der Bildebene 48.

In Schritt S54, der ebenfalls im ersten Zyklus entfällt, werden dann für alle projizierten, sich von dem Laserscanner 12 entfernenden Objekten entsprechende Entfernungsbildpunkte des vorhergehenden Zyklus bzw. entsprechende Schnittpunkte entsprechende aktuelle optische Flussvektoren, im folgenden auch nur als optische Flüsse bezeichnet, auf der Basis des Videobildes aus dem unmittelbar vorhergehenden Zyklus und aus dem aktuellen Zyklus ermittelt und durch Multiplikation mit der Zyklusdauer bzw. dem Kehrwert der Abtastfrequenz in einen Verschiebungsvektor umgerechnet. In Fig. 13 ist dies für den Entfernungsbildpunkt 52 gezeigt, für den an dem Schnittpunkt 54 ein optischer Flussvektor bestimmt wird, der in der Bildebene 48 liegt und der nach Skalierung mit der Zykluszeit einen in dem Schnittpunkt 54 beginnenden Verschiebungsvektor 56 ergibt. Der optische Fluss wird dabei mittels eines differentiellen Verfahrens ermittelt, in diesem Beispiel dem in "Performance of optical flow techniques" von J.L. Barren, D. J. Fleed und S. S. Beauchemin, International Journal of Computervision, 12 (1), S. 43 - 77 (1994) beschriebenen Verfahren nach Lukas und Canade.

Für alle sich entfernenden Objekten entsprechende Entfernungsbildpunkte, für die ein optischer Fluss ermittelt wurde, wird dann in Schritt S56 eine mittels des optischen Flusses prädizierte Lage eines entsprechenden Gegenstandspunktes in dem aktuellen Zyklus in der Abtastebene 40 ermittelt. Geometrisch in Fig. 13 veranschaulicht wird dazu der Schnittpunkt 57 einer durch das optische Zentrum 50 und den Endpunkt des Verschiebungsvektors 56 verlaufenden Geraden mit der Abtastebene 40 ermittelt.

In Schritt S58 werden aktuelle Entfernungsbildpunkte, in Fig. 13 beispielsweise der aktuelle Entfernungsbildpunkt 58, des aktuellen Entfernungsbilds zu prädizierten Lagen und entsprechenden Entfernungsbildpunkten des vorhergehenden Bildes bzw. Zyklus zugeordnet, sofern dies möglich ist. Als Zuordnungskriterium kann beispielsweise verwendet werden, dass derjenige aktuelle Entfernungsbildpunkt zugeordnet wird, dessen quadratische Abstand zwischen der prädizierten Lage und der tatsächlichen aktuellen Lage minimal verglichen mit denen anderer aktueller Entfernungsbildpunkte ist.

In Schritt S60 werden dann die noch nicht zugeordneten Entfernungsbildpunkte des aktuellen Zyklus, die demnach sich nicht von dem Laserscanner 12 entfernenden Gegenständen entsprechen müssen, auf die Bildebene 48 projiziert, was analog zu der Projektion in Schritt S52 erfolgt.

Für alle projizierten, noch nicht zugeordneten Entfernungsbildpunkte des aktuellen Zyklus werden dann im Schritt S62 analog zu Schritt S54 optische Flüsse berechnet.

Für alle noch nicht zugeordneten Entfernungsbildpunkte des aktuellen Zyklus, für die ein optischer Fluss ermittelt wurde, wird nun in Schritt S64 eine zurückverfolgte Lage eines entsprechenden Gegenstandspunktes in der Abtastebene 40 bestimmt. Die Bestimmung der zurückverfolgten Lage erfolgt dabei analog zu der Ermittlung der prädizierten Lage in Schritt S56, wobei jedoch als Verschiebungsvektor ein dem optischen Fluss entgegengesetzt gerichteter entsprechender Vektor verwendet wird.

In Schritt S66 erfolgt dann eine Zuordnung von Entfernungsbildpunkten des vorhergehenden Zyklus, die nicht sich von dem Sensor entfernenden Objekten entsprechen, zu dann vorgegebenen, zurückverfolgten Lagen und entsprechenden noch nicht zugeordneten Entfernungsbildpunkten des aktuellen Zyklus in Schritt S64. Die Zuordnung kann nach einem entsprechenden Schema erfolgen, wie in Schritt S58, wobei jedoch nun vorgegebenen Entfernungsbildpunkten des aktuellen Zyklus bzw. entsprechenden zurückverfolgten Lagen Entfernungsbildpunkte des vorhergehenden Entfernungsbildes zugeordnet werden.

Auf diese Weise werden also Entfernungsbildpunkte des vorhergehende Zyklus und des aktuellen Zyklus bzw. Bildes einander zugeordnet, wobei die Zuordnung für sich von dem Laserscanner 12 entfernende Objekte derart erfolgt, dass aktuelle Entfernungsbildpunkte Entfernungsbildpunkten des vorhergehenden Bildes zugeordnet werden, während die verbleibenden Entfernungsbildpunkte des vorhergehenden Bildes, die nicht sich vom Sensor bzw. Laserscanner 12 entfernenden Objekten zugeordnet sind, den noch nicht zugeordneten Entfernungsbildpunkten des aktuellen Zyklus und Entfernungsbildes bzw. deren zurückverfolgten Lagen zugeordnet werden.

In Schritt S68 erfolgt nun eine Segmentierung des aktuellen Entfernungsbildes entsprechend der Segmentierung in Schritt S12 des ersten Ausführungsbeispiels.

In Schritt S70 wird dann eine Segment-Objekt-Zuordnung durchgeführt, wobei die Zuordnung von Entfernungsbildpunkten des vorhergehenden Entfernungsbildes und des aktuellen Entfernungsbildes sowie die Zuordnung zwischen Entfernungsbildpunkten des vorhergehenden Entfernungsbildes und Objekten des vorhergehenden Zyklus verwendet werden.

In Schritt S72 werden Objekteigenschaften, insbesondere deren Lagen und Geschwindigkeiten, ermittelt und ausgegeben.

Das Verfahren kann dann mit Schritt S50 in dem nächsten Zyklus fortgesetzt werden. Ein Prädiktionsschritt kann durch die Verwendung des optischen Flusses entfallen.

Bei anderen Varianten des Verfahrens nach dem vierten Ausführungsbeispiel kann die Projektion in anderer Art und Weise erfolgen, Beispiele hierfür sind in der in Bezug genommenen Patentanmeldung in weiteren Ausführungsbeispielen beschrieben, die hiermit ausdrücklich unter Bezugnahme in die Beschreibung aufgenommen werden.

Durch die andere Behandlung von Entfernungsbildpunkten, die sich nicht von dem Laserscanner 12 entfernenden Gegenständen entsprechen, wird eine eindeutigere Zuordnung von Entfernungsbildpunkten erreicht. Denn im aktuellen Zyklus werden aufgrund der Abbildungsgeometrie des Laserscanners 12, der seinen Erfassungsbereich 18 radial abtastet, solchen Gegenständen jeweils mehr Entfernungsbildpunkte entsprechen als im vorhergehenden Zyklus. Es kann dann eine Zuordnung von mehreren Entfernungsbildpunkten des aktuellen Zyklus zu beispielsweise einem vorgegebenen Entfernungsbildpunkt des vorhergehenden Zyklus vermieden werden, bei der für sich dem Laserscanner nähernde Objekte der Fall auftreten kann, dass mehrere Entfernungsbildpunkte des aktuellen Bildes einem prädizierten Entfernungsbildpunkt zugeordnet werden müssten, was jedoch wegen der Mehrdeutigkeit ein kompliziertes Zuordnungsverfahren mit sich bringen kann.

Bei einem Verfahren nach einer fünften bevorzugten Ausführungsform der Erfindung erfolgt eine Objekterkennung und -verfolgung nur auf der Basis von Videobildern. Eine entsprechende Vorrichtung zur Objekterkennung und -verfolgung nach einer fünften bevorzugten Ausführungsform der Erfindung umfasst daher eine wie in den vorhergehenden beiden Ausführungsbeispielen verwendetes Videosystem, dessen Videokamera mit einer Datenverarbeitungseinrichtung wie in den vorhergehenden zwei Ausführungsbeispielen verbunden ist, die jedoch zur Durchführung des Verfahrens nach der fünften bevorzugten Ausführungsform programmiert ist. Das heißt auch, dass die Mittel zur Zuordnung von Teilen eines früheren Bildes und/oder zur Ermittlung wenigstens einer Angabe in Bezug auf einen früheren Zustand des Objekts oder eines diesem entsprechenden Gegenstands auf der Basis eines entsprechenden früheren Bildes und Zuordnung der Angabe zu dem Teil des aktuellen Bildes oder dem aktuellen Objekt, modifiziert sind. Der Laserscanner 12 entfällt.

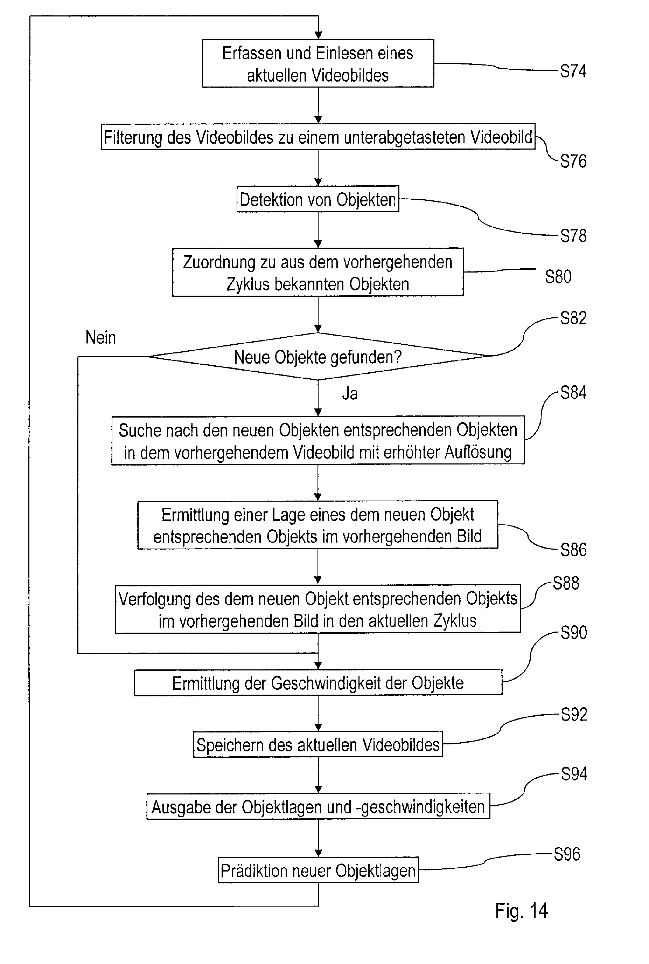

Bei diesem in Fig. 14 veranschaulichten Verfahren wird in einem aktuellen Zyklus zunächst in Schritt S74 ein aktuelles Videobild erfasst und eingelesen. Dabei kann wie in den vorhergehenden beiden Ausführungsbeispielen eine entsprechende Vorverarbeitung der Videobilddaten erfolgen.

In Schritt S76 wird zur Erhöhung der Verarbeitungsgeschwindigkeit das eingelesene Videobild einer die Bildauflösung reduzierenden Filterung unterzogen, die im vorliegenden Ausführungsbeispiel darin besteht, dass aus 4x4-Blöcken von Videobildpunkten bzw. Pixeln jeweils nur das Pixel in der linken unteren Ecke verwendet wird.

In Schritt S78 werden dann Objekte in dem unterabgetasteten Videobild detektiert. Hierzu können übliche Verfahren der Objekterkennung und -verfolgung in Videobildern verwendet werden.

In Schritt S80 erfolgt nun eine Zuordnung der detektierten Objekte zu Objekten aus dem vorhergehenden Zyklus. Die Zuordnung erfolgt im Beispiel basierend auf prädizierten Objektlagen für den aktuellen Zyklus, die in dem vorhergehenden Zyklus in einem Schritt S94 ermittelt wurden, mittels bekannter Assoziationsmethoden.

In Schritt S82 wird geprüft, ob neue Objekte erkannt wurden, die keinem der Objekte des vorhergehenden Zyklus zuzuordnen waren. Wurden keine neuen Objekte detektiert, wird das Verfahren mit Schritt S90 fortgesetzt.

Andernfalls wird zunächst in Schritt S84 in dem vorhergehenden Videobild, das nicht bzw. im Beispiel nur halb so stark unterabgetastet ist wie das in Schritt S76 erzeugte Bild, nach einem Objekt gesucht, das einem neuen Objekt entspricht.

Aufgrund der erhöhten Auflösung sind in dem vorhergehenden Videobild damit auch Objekte detektierbar, die ansonsten aufgrund der Unterabtastung nicht zu erkennen wären.

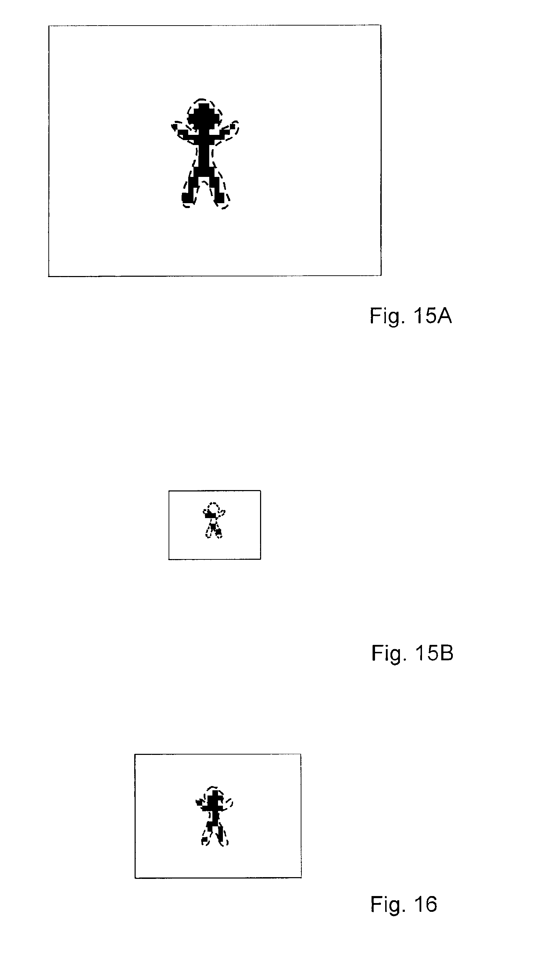

Dies ist in den Fig. 15A und 15B sowie 16 nochmals für eine sich dem Videosystem nähernde Person dargestellt. In Fig. 15A ist die Person schematisch in einem aktuellen Videobild voller Auflösung dargestellt, wobei schwarze Rechtecke Videobildpunkte bzw. Pixel darstellen, die der Person entsprechen. Durch die oben erwähnte Unterabtastung ergibt sich das in Fig. 15B gezeigte unterabgetastete Videobild, bei dem die Person nur noch durch vier einzelne Pixel dargestellt ist. Hat sich nun die Person aus größerer Entfernung der Videokamera genähert, so kann sie in dem vorhergehenden Videobild bei voller Auflösung beispielsweise die in Fig. 16 gezeigte Größe aufweisen, wobei nach Unterabtastung kein Pixel überbliebe, mittels dessen ein entsprechendes Objekt detektierbar sein könnte.

Bei dem hier verwendeten Verfahren wird jedoch in dem vorhergehenden Bild in voller Auflösung und nicht in der herabgesetzten Auflösung nach dem neuen Objekt gesucht, das daher auch gefunden werden kann. Da das neue Objekt bzw. der Gegenstand nur in der Nähe des in dem aktuellen Videobild detektierten Objekts auftreten kann, wird nichtsdestotrotz die Rechenzeit zur Erkennung des Objekts in dem vorhergehenden Videobild stark reduziert.

In Schritt S88 werden die dem den neuen Objekten entsprechenden Objekte im vorhergehenden Videobild in den aktuellen Zyklus hinein verfolgt, was problemlos möglich ist, da das entsprechende Objekt bereits in dem unterabgetasteten aktuellen Videobild detektiert wurde.

Aufgrund der ermittelten Lagen der Objekte in dem vorhergehenden Videobild und damit in dem vorhergehenden Zyklus und in dem aktuellen Zyklus können nun in Schritt S90 Geschwindigkeiten der Objekte durch Schätzung bzw. Differenzbildung ermittelt werden.

In Schritt S92 wird dann das aktuelle Videobild gespeichert, wobei das vorhergehende Videobild gelöscht wird.

In Schritt S94 erfolgt eine Ausgabe der Objektlagen und Geschwindigkeiten zur Verwendung in folgenden Anwendungen.

Auf der Basis der Objektlagen und Geschwindigkeiten werden dann im Schritt S96 neue Objektlagen für den folgenden Zyklus prädiziert, in der Nähe derer nach Objekten in dem Videobild des folgenden Zyklus gesucht wird. Hierzu kann wieder ein Kalman-Filter verwendet werden.

Das Verfahren nach fünften Ausführungsbeispiel erlaubt zum einen durch die Unterabtastung eine hohe Ausführungsgeschwindigkeit. Zum anderen ist es jedoch für sich nähernde, neue und damit für ein Fahrzeug kritische Objekte möglich, bei deren erstem Auftreten bereits unter Verwendung eines früheren Videobildes deren Geschwindigkeiten zu bestimmen, so dass in einer Gefahrensituation die Reaktionszeit um eine Zyklusdauer verkürzt werden kann.

### Bezugszeichenliste

- 10: Fahrzeug
- 12: Laserscanner
- 14, 14': Datenverarbeitungseinrichtung
- 16: Gegenstand
- 18: Erfassungsbereich
- 20: Laserstrahlungsbündel
- 22: Gegenstandspunkt
- 24: Fahrzeug
- 26: Fußgänger
- 28: Videosystem
- 30: Videokamera
- 32: CCD-Flächensensor
- 34: Linse
- 36: Erfassungsbereich
- 38: optische Achse
- 40: Abtastebene
- 42: gemeinsamer Erfassungsbereich
- 44: Fahrzeug
- 46: Person
- 48: Bildebene
- 50: optisches Zentrum
- 52: Gegenstandspunkt
- 54: Schnittpunkt
- 56: Verschiebungsvektor
- 57: Schnittpunkt
- 58: Gegenstandspunkt

- v: Geschwindigkeitsvektor
- d: Verschiebungsvektor

## Patentansprüche

1. Verfahren zur Erkennung und Verfolgung von Objekten, die Gegenständen (16, 24, 26, 44, 46) in wenigstens einem Erfassungsbereich (18, 36) wenigstens eines Sensors (12, 28) für elektromagnetische Strahlung entsprechen, auf der Basis von wiederholt mittels des wenigstens einen Sensors (12, 28) erfassten Bildern des Erfassungsbereichs (18, 36), bei dem in aufeinander folgenden Zyklen aufeinander folgende Bilder ausgewertet werden und jeweils wenigstens ein in einem Zyklus auf der Basis wenigstens eines entsprechenden Bildes aufgefundenes Objekt in einem späteren Zyklus in einem entsprechenden späteren Bild gesucht wird, um es zu verfolgen, und bei dem auf der Basis der Ergebnisse einer wenigstens vorläufigen Auswertung eines aktuellen Bildes während wenigstens eines aktuellen Zyklus wenigstens einem in dem aktuellen Zyklus ermittelten Teil eines aktuellen Bildes oder einem in dem aktuellen Zyklus erkannten Objekt wenigstens ein Teil eines früheren Bildes und/oder wenigstens eine Angabe in Bezug auf einen früheren Zustand des Objekts oder eines diesem entsprechenden Gegenstands (16, 24, 26, 44, 46), die unter Verwendung eines entsprechenden früheren Bildes in dem aktuellen Zyklus ermittelt wird, zugeordnet wird, wobei zeitlich einander zugeordnete Entfernungs- und Videobilder wenigstens eines gemeinsamen Teilbereichs des Erfassungsbereichs (18, 36) verwendet werden, dass Entfernungsbildpunkten in einem früheren Entfernungsbild Entfernungsbildpunkte in einem aktuellen Entfernungsbild zugeordnet werden, indem für wenigstens einen einem Entfernungsbildpunkt in dem früheren Entfernungsbild entsprechenden Bereich und/oder wenigstens ein einem Entfernungsbildpunkt in dem früheren Entfernungsbild entsprechendes Merkmal des entsprechenden früheren Videobildes und/oder des aktuellen Videobildes eine Verschiebung und/oder Verschiebungsgeschwindigkeit, insbesondere ein optischer Fluss, ermittelt wird, und die Verschiebung bzw. Verschiebungsgeschwindigkeit, insbesondere der optische Fluss, zur Zuordnung eines Entfernungsbildpunktes in dem aktuellen Entfernungsbild zu dem Entfernungsbildpunkt in dem früheren Entfernungsbild verwendet wird, wobei für Objekte in dem Entfernungsbild, die sich einem die Entfernungsbilder erfassenden Sensor nähern und/oder in einem aktuellen Zyklus mehr Entfernungsbildpunkte aufweisen als in einem früheren Zyklus, Entfernungsbildpunkten in dem aktuellen Zyklus unter Verwendung der entsprechenden Verschiebung bzw. Verschiebungsgeschwindigkeit des Bereichs bzw. Merkmals, insbesondere des entsprechenden optischen Flusses, Entfernungsbildpunkte in dem vorhergehenden Zyklus zugeordnet werden.

2. Computerprogramm mit Programmcode-Mitteln, um das Verfahren nach Anspruch 1 durchzuführen, wenn das Programm auf einem Computer ausgeführt wird.

3. Computerprogrammprodukt mit Programmcode-Mitteln, die auf einem computerlesbaren Datenträger gespeichert sind, um das Verfahren nach Anspruch 1 durchzuführen, wenn die Programmcodemittel auf einem Computer ausgeführt werden.
